# EUROPEAN PATENT APPLICATION

(11) **EP 4 819 566 A1**
(43) Date of publication of application: **07.10.2026**
(21) Application number: 24911015.6
(22) Date of filing: 23.12.2024
(51) Int. Cl.: H04L 43/08

(54) **SERVICE FLOW ANALYSIS METHOD, APPARATUS, AND SYSTEM**

(30) Priority: 26.12.2023 CN 202311820481
(71) Applicant: Huawei Technologies Co., Ltd., Shenzhen, Guangdong 518129 (CN)
(72) Inventor: WANG, Zhongyu, Shenzhen, Guangdong 518129 (CN); DONG, Feng, Shenzhen, Guangdong 518129 (CN); SONG, Wei, Shenzhen, Guangdong 518129 (CN); WU, Qin, Shenzhen, Guangdong 518129 (CN); LUO, Yi, Shenzhen, Guangdong 518129 (CN); TIAN, Shang, Shenzhen, Guangdong 518129 (CN)
(74) Representative: Epping - Hermann - Fischer
(86) International application number: PCT/CN2024/141370
(87) International publication number: WO 2025/140087

(57) **Abstract**

This application pertains to the field of network technologies, and provides a service traffic analysis method, apparatus, and system. A network management device obtains measurement task information of a service, and delivers measurement commands to a plurality of network devices, to indicate the network devices to collect statistics on a traffic characteristic of a flow passing through the network devices. The service includes a plurality of service flows, and the measurement task information includes device identifiers of a plurality of terminal devices associated with the service. After receiving measurement results reported by the plurality of network devices, the network management device determines, based on the measurement results sent by the plurality of network devices and the device identifiers of the plurality of terminal devices, a traffic analysis result corresponding to the service. In this application, statistics on traffic characteristics corresponding to flow identifiers of flows passing through a plurality of network devices in a network are collected, so that a traffic analysis result corresponding to a service can be determined based on traffic characteristics of a plurality of service flows of the service, to implement network measurement at a per-service granularity. This helps monitor and analyze service quality.

## Description

This application claims priority to Chinese Patent Application No. 202311820481.6, filed on December 26, 2023 and entitled "SERVICE TRAFFIC ANALYSIS METHOD, APPARATUS, AND SYSTEM", which is incorporated herein by reference in its entirety.

### TECHNICAL FIELD

This application relates to the field of network technologies, and in particular, to a service traffic analysis method, apparatus, and system.

### BACKGROUND

With rapid development of network technologies, more services need traffic transmission through the network during operation. The transmission of service traffic in the network directly affects service quality. Therefore, it is crucial to analyze the transmission of service traffic in the network.

### SUMMARY

This application provides a service traffic analysis method, apparatus, and system.

According to a first aspect, a service traffic analysis method is provided. The method may be applied to a network management device. The method includes: The network management device obtains measurement task information of a service, where the measurement task information includes device identifiers of a plurality of terminal devices associated with the service. The service includes a plurality of service flows, and the plurality of terminal devices include sending devices and receiving devices of the plurality of service flows. The network management device sends measurement commands to a plurality of network devices in a network, where the measurement command indicates a network device that receives the measurement command to collect statistics on a traffic characteristic of one or more flows passing through the network device. The network management device receives measurement results sent by the plurality of network devices. A measurement result sent by each network device includes a traffic characteristic corresponding to a flow identifier of one or more flows passing through the network device. A flow identifier of each flow includes a device identifier of a sending device of the flow and a device identifier of a receiving device of the flow. The network management device determines, based on the measurement results sent by the plurality of network devices and the device identifiers of the plurality of terminal devices, a traffic analysis result corresponding to the service.

In this application, the network management device collects traffic characteristics corresponding to flow identifiers of flows passing through the plurality of network devices in the network, so that for a service with a plurality of service flows, the network management device can determine the plurality of service flows of the service based on the collected flow identifiers and device identifiers in measurement task information of the service, and then determine, based on traffic characteristics of the plurality of service flows, a traffic analysis result corresponding to the service, to implement network measurement at a per-service granularity. This helps monitor and analyze service quality.

Optionally, the service is a collective communication or distributed training task. The distributed training task may include one or more times of collective communication.

In this application, a traffic characteristic of each service flow in the collective communication may be analyzed based on a characteristic of the collective communication, and a traffic analysis result is presented at a granularity of collective communication, thereby coordinating with a compute task, to assist in analyzing whether slowness or a failure of distributed training is caused by a network side or a computing side.

Optionally, an implementation in which the network management device determines, based on the measurement results sent by the plurality of network devices and the device identifiers of the plurality of terminal devices, the traffic analysis result corresponding to the service includes: For the measurement result sent by each network device, the network management device determines, based on a flow identifier in the measurement result and the device identifiers of the plurality of terminal devices, a service flow that belongs to the service from among the one or more flows passing through the network device. The network management device determines the traffic analysis result based on traffic characteristics of the plurality of service flows in the measurement results sent by the plurality of network devices. The network management device may determine, as the service flow of the service, a flow whose sending device and receiving device both belong to the plurality of terminal devices.

In a first implementation, the plurality of network devices include a first network device, a measurement result sent by the first network device includes a first traffic characteristic of a first service flow, the first service flow is any one of the plurality of service flows, and the first service flow includes a plurality of packet groups respectively used to complete a plurality of data transmissions. The first traffic characteristic includes a transmission start time and a transmission end time of each of the plurality of packet groups. An implementation in which the network management device determines the traffic analysis result based on the traffic characteristics of the plurality of service flows in the measurement results sent by the plurality of network devices includes: The network management device determines a flow completion time (flow completion time, FCT) of the first service flow in a first statistical period based on a transmission duration of one or more packet groups, among the plurality of packet groups, whose transmission end times are in the first statistical period. A transmission duration of each packet group is obtained based on a transmission end time and a transmission start time of the packet group. The traffic analysis result includes flow completion times of the plurality of service flows in a plurality of statistical periods, and the first statistical period is any one of the plurality of statistical periods.

In this implementation, the network device only needs to collect statistics on a start time and an end time of each data transmission in a flow passing through the network device, and the network management device performs traffic analysis on the service based on a traffic characteristic reported by the network device, to determine the flow completion time of the plurality of service flows of the service in the plurality of statistical periods. This implementation sets low requirements on processing performance of the network device.

In a second implementation, the plurality of network devices include a second network device, a measurement result sent by the second network device includes a second traffic characteristic of a second service flow, the second service flow is any one of the plurality of service flows, and the second service flow includes a plurality of packet groups respectively used to complete a plurality of data transmissions. The second traffic characteristic includes a flow completion time of the second service flow in a second statistical period. The flow completion time of the second service flow in the second statistical period is obtained based on a transmission duration of one or more packet groups, among the plurality of packet groups, whose transmission end times are in the second statistical period. A Transmission duration of each packet group is obtained based on a transmission end time and a transmission start time of the packet group. The traffic analysis result includes flow completion times of the plurality of service flows in a plurality of statistical periods, and the second statistical period is any one of the plurality of statistical periods.

In this implementation, the network device collects statistics on a start time and an end time of each data transmission in a flow passing through the network device, and performs traffic analysis, to determine flow completion times of the flow passing through the network device in the plurality of statistical periods; and the network management device summarizes and collects statistics on the traffic characteristics reported by the plurality of network devices, to obtain the flow completion times of the plurality of service flows of the service in the plurality of statistical periods. This implementation sets low requirements on processing performance of the network management device, and can improve traffic analysis efficiency of the network management device for the service.

Optionally, a flow completion time of one service flow in a statistical period is a statistical value of transmission durations of all packet groups, in the service flow, whose transmission end times are in the statistical period. The statistical value may be an average value, a median value, a maximum value, or a quantile value.

Optionally, for any one of the plurality of service flows, if a difference between a flow completion time of the service flow in a third statistical period and a flow completion time of the service flow in a fourth statistical period is greater than a first threshold, the network management device determines that transmission quality of the service flow deteriorates. The third statistical period is later than the fourth statistical period in time sequence. In other words, if a flow completion time of a service flow becomes longer, it indicates that transmission quality of the service flow deteriorates. The traffic analysis result further includes an indication for a service flow whose transmission quality deteriorates among the plurality of service flows.

In the first implementation or the second implementation, flow completion times of a plurality of service flows of a same service in the plurality of statistical periods are measured, and changes of the flow completion times of the plurality of service flows with time are presented at a per-service granularity. A change of a flow completion time of a single service flow with time can reflect a change of transmission quality of the service flow, and the changes of the flow completion times of the plurality of service flows with time can reflect a change of overall service transmission quality. This helps operation and maintenance personnel analyze whether the overall service transmission quality deteriorates and a specific service flow that causes the deterioration of the service transmission quality.

In a third implementation, the plurality of network devices include a third network device, a measurement result sent by the third network device includes a third traffic characteristic of a third service flow, the third service flow is any one of the plurality of service flows, and the third service flow includes a plurality of packet groups respectively used to complete a plurality of data transmissions. The third traffic characteristic includes a transmission start time, a transmission end time, and a traffic volume of each of the plurality of packet groups. An implementation in which the network management device determines the traffic analysis result based on the traffic characteristics of the plurality of service flows in the measurement results sent by the plurality of network devices includes: the network management device determines a throughput of the third network device for the third service flow in a fifth statistical period based on a transmission duration and a traffic volume of one or more packet groups, among the plurality of packet groups, whose transmission end times are in the fifth statistical period. A transmission duration of each packet group is obtained based on a transmission end time and a transmission start time of the packet group. The traffic analysis result includes throughputs of the plurality of network devices for service flows passing through the plurality of network devices in a plurality of statistical periods, and the fifth statistical period is any one of the plurality of statistical periods.

In this implementation, the network device only needs to collect statistics on a start time, an end time, and a traffic volume of each data transmission in a flow passing through the network device, and the network management device performs traffic analysis on the service based on traffic characteristics reported by the plurality of network devices, to determine the throughputs of the plurality of network devices for the plurality of service flows of the service in the plurality of statistical periods. This implementation sets low requirements on processing performance of the network device.

In a fourth implementation, the plurality of network devices include a fourth network device, a measurement result sent by the fourth network device includes a fourth traffic characteristic of a fourth service flow, the fourth service flow is any one of the plurality of service flows, and the fourth service flow includes a plurality of packet groups respectively used to complete a plurality of data transmissions. The fourth traffic characteristic includes a throughput of the fourth network device for the fourth service flow in a sixth statistical period, and the throughput for the fourth service flow in the sixth statistical period is obtained based on a transmission duration and a traffic volume of one or more packet groups, among the plurality of packet groups, whose transmission end times are in the sixth statistical period. A transmission duration of each packet group is obtained based on a transmission end time and a transmission start time of the packet group. The traffic analysis result includes throughputs of the plurality of network devices for service flows passing through the plurality of network devices in a plurality of statistical periods, and the sixth statistical period is any one of the plurality of statistical periods.

In this implementation, the network device collects statistics on a start time, an end time, and a traffic volume of each data transmission in a flow passing through the network device, and performs traffic analysis, to determine throughputs for the flow passing through the network device in the plurality of statistical periods; and the network management device summarizes and collects statistics on the traffic characteristics reported by the plurality of network devices, to obtain the throughputs of the plurality of network devices for the plurality of service flows of the service in the plurality of statistical periods. This implementation sets low requirements on processing performance of the network management device, and can improve traffic analysis efficiency of the network management device for the service.

Optionally, for any one of the plurality of service flows, if a difference between a throughput, of any network device through which the service flow passes, for the service flow in a seventh statistical period and a throughput of the network device for the service flow in an eighth statistical period is greater than a second threshold, the network management device determines that transmission quality of the service flow deteriorates. The eighth statistical period is later than the seventh statistical period in time sequence. In other words, if a throughput of the network device for a service flow becomes lower, it indicates that transmission quality of the service flow deteriorates. The traffic analysis result further includes an indication for a service flow whose transmission quality deteriorates among the plurality of service flows.

In the third implementation or the fourth implementation, throughputs of the network device for a plurality of service flows of a same service in the plurality of statistical periods are measured, and changes of the throughputs of the network device for the service flows with time are presented at a granularity of a service. A change of a throughput of the network device for a single service flow with time can reflect a change of transmission quality of the service flow, and changes of throughputs of the plurality of network devices for the plurality of service flows with time can reflect a change of overall service transmission quality. This helps operation and maintenance personnel analyze whether the overall service transmission quality deteriorates and a specific service flow that causes the deterioration of the service transmission quality.

Optionally, with reference to any one of the first implementation to the fourth implementation, an implementation in which the network management device sends the measurement commands to the plurality of network devices in the network includes: The network management device respectively sends the measurement commands to a plurality of access network devices in the network, where each access network device is configured to enable one or more of the plurality of terminal devices to access the network.

A service flow sent or received by the terminal device associated with the service inevitably passes through an access network device. When a service flow is transmitted in the network, flow completion times and throughputs for the service flow on different network devices are basically the same. Therefore, when a traffic characteristic whose statistics are to be collected includes a flow completion time and/or a throughput, only statistics on a traffic characteristic of a flow passing through the access network device need to be collected. In this way, on a premise that statistics on traffic characteristics of all service flows of the service are collected, a quantity of network devices participating in service traffic analysis can be reduced, to save communication resources between the network device and the network management device and respective processing resources of the network device and the network management device.

In a fifth implementation, the measurement result sent by each network device includes a traffic volume of the one or more flows passing through the network device. An implementation in which the network management device determines the traffic analysis result based on the traffic characteristics of the plurality of service flows in the measurement results sent by the plurality of network devices includes: For each network device, the network management device determines, an accumulated traffic volume of the network device for the service based on traffic volumes of all service flows in the measurement result sent by the network device. The network management device determines load balance of the plurality of network devices for the service based on accumulated traffic volumes of the plurality of network devices for the service. The load balance is negatively correlated with a difference between the accumulated traffic volumes of the plurality of network devices for the service. The traffic analysis result includes the load balance of the plurality of network devices for the service.

Higher load balance indicates that traffic distribution on the network device is more even when the plurality of service flows of the service are transmitted in the network, and a probability that congestion occurs on the network device is lower. In this application, the network management device analyzes load balance of different network devices on network paths through which the service flow passes, to help an operation and maintenance side analyze and adjust a transmission path of the service flow in the service, so as to improve load balance of the plurality of network devices for the service.

Optionally, with reference to the fifth implementation, an implementation in which the network management device sends the measurement commands to the plurality of network devices in the network includes: The network management device respectively sends the measurement commands to all network devices on network paths of the plurality of service flows in the network. In this way, a quantity of network devices participating in service traffic analysis can be reduced, to save communication resources between the network device and the network management device and respective processing resources of the network device and the network management device.

Optionally, the measurement command further includes a measurement indication, and the measurement indication includes one or more of the following: a source internet protocol (Internet Protocol, IP) address set, where the source IP address set includes an IP address of each of one or more of the plurality of terminal devices, and the source IP address set indicates a network device that receives the measurement command to collect statistics on a traffic characteristic of a flow, passing through the network device, whose source IP address belongs to the source IP address set; a destination IP address set, where the destination IP address set includes an IP address of each of one or more of the plurality of terminal devices, and the destination IP address set indicates a network device that receives the measurement command to collect statistics on a traffic characteristic of a flow, passing through the network device, whose destination IP address belongs to the destination IP address set; an ingress indication, where the ingress indication indicates a network device that receives the measurement command to collect statistics on a traffic characteristic of one or more flows received by the network device; an egress indication, where the egress indication indicates a network device that receives the measurement command to collect statistics on a traffic characteristic of one or more flows sent by the network device; and an interface indication, where the interface indication indicates a network device that receives the measurement command to collect statistics on a traffic characteristic of a flow passing through one or more specified interfaces of the network device, the measurement result sent by the network device further includes an interface identifier, and the interface identifier indicates an interface through which the flow passes on the network device.

In this application, the network management device includes the measurement indication in the measurement command, so that the network device collects statistics on traffic characteristics of some flows in a targeted manner, thereby reducing statistics collection on a traffic characteristic of an unwanted flow by the network device, and saving processing resources of the network device. Optionally, the measurement task information further includes a traffic analysis task, and the traffic analysis task indicates a traffic analysis type. The network management device may generate the measurement command based on the traffic analysis task, where a type of a traffic characteristic indicated by the measurement command for statistical collection matches the traffic analysis type indicated by the traffic analysis task. Correspondingly, an implementation in which the network management device determines, based on the measurement results sent by the plurality of network devices and the device identifiers of the plurality of terminal devices, the traffic analysis result corresponding to the service includes: The network management device determines, based on the measurement results sent by the plurality of network devices and the device identifiers of the plurality of terminal devices, the traffic analysis result of the service for the traffic analysis type indicated by the traffic analysis task.

Optionally, an implementation in which the network management device obtains the measurement task information of the service includes: The network management device receives a service measurement task sent by a service platform, where the service measurement task includes the measurement task information.

Optionally, the network management device sends a service measurement result to the service platform, where the service measurement result includes the traffic analysis result.

Optionally, the plurality of service flows are remote direct memory access (remote direct memory access, RDMA) flows.

According to a second aspect, a service traffic analysis method is provided. The method may be applied to a service platform. The method includes: A service platform sends a service measurement task to a network management device, where the service measurement task includes measurement task information of a service. The measurement task information includes device identifiers of a plurality of terminal devices associated with the service. The service includes a plurality of service flows, and the plurality of terminal devices include sending devices and receiving devices of the plurality of service flows. The service platform receives a service measurement result sent by the network management device, where the service measurement result includes a traffic analysis result corresponding to the service.

In this application, the service platform may send the service measurement task to the network management device, to trigger the network management device to perform a service traffic analysis procedure. Then, the service platform may receive the traffic analysis result sent by the network management device, so that the operation and maintenance personnel can view a running status of the service in the network through the service platform.

Optionally, the service is a collective communication or distributed training task.

Optionally, the service platform outputs the traffic analysis result. The service platform may display the traffic analysis result, or the service platform may send the traffic analysis result to a display device for display, so that operation and maintenance personnel view the traffic analysis result corresponding to the service, to implement quality monitoring and management of the service.

According to a third aspect, a service traffic analysis method is provided. The method may be applied to a network device. The method includes: The network device receives a measurement command sent by a network management device, where the measurement command indicates the network device to collect statistics on a traffic characteristic of one or more flows passing through the network device. The network device collects, based on the measurement command, statistics on the traffic characteristic of the one or more flows passing through the network device. The network device sends a measurement result to the network management device, where the measurement result includes a traffic characteristic corresponding to a flow identifier of the one or more flows passing through the network device. A flow identifier of each flow includes a device identifier of a sending device of the flow and a device identifier of a receiving device of the flow. Optionally, the measurement command further includes a measurement indication, and the measurement indication includes one or more of the following: a source IP address set, where the source IP address set includes one or more IP addresses, and the source IP address set indicates the network device to collect statistics on a traffic characteristic of a flow, passing through the network device, whose source IP address belongs to the source IP address set; a destination IP address set, where the destination IP address set includes one or more IP addresses, and the destination IP address set indicates the network device to collect statistics on a traffic characteristic of a flow, passing through the network device, whose destination IP address belongs to the destination IP address set; an ingress indication, where the ingress indication indicates the network device to collect statistics on a traffic characteristic of one or more flows received by the network device; an egress indication, where the egress indication indicates the network device to collect statistics on a traffic characteristic of one or more flows sent by the network device; and an interface indication, where the interface indication indicates the network device to collect statistics on a traffic characteristic of a flow passing through one or more specified interfaces of the network device, the measurement result sent by the network device further includes an interface identifier, and the interface identifier indicates an interface through which the flow passes on the network device.

In a first implementation, a measurement result includes a first traffic characteristic of a first flow. The first flow is any flow in the one or more flows passing through the network device, the first flow includes a plurality of packet groups respectively used to complete a plurality of data transmissions, and the first traffic characteristic includes a transmission start time and a transmission end time of each of the plurality of packet groups.

In a second implementation, a measurement result includes a second traffic characteristic of a second flow. The second flow is any flow in the one or more flows passing through the network device, and the second flow includes a plurality of packet groups respectively used to complete a plurality of data transmissions. The second traffic characteristic includes a flow completion time of the second flow in one or more statistical periods. A flow completion time of the second flow in each statistical period is obtained based on a transmission duration of one or more packet groups, among the plurality of packet groups, whose transmission end times are in the statistical period. A transmission duration of each packet group is obtained based on a transmission end time and a transmission start time of the packet group.

In a third implementation, a measurement result includes a third traffic characteristic of a third flow. The third flow is any flow in the one or more flows passing through the network device, the third flow includes a plurality of packet groups respectively used to complete a plurality of data transmissions, and the third traffic characteristic includes a transmission start time, a transmission end time, and a traffic volume of each of the plurality of packet groups.

In a fourth implementation, a measurement result includes a fourth traffic characteristic of a fourth flow. The fourth flow is any flow in the one or more flows passing through the network device, and the fourth flow includes a plurality of packet groups respectively used to complete a plurality of data transmissions. The fourth traffic characteristic includes a throughput of the network device for the fourth flow in one or more statistical periods. A throughput for the fourth flow in each statistical period is obtained based on a transmission duration and a traffic volume of one or more packet groups, among the plurality of packet groups, whose transmission end times are in the statistical period. A transmission duration of each packet group is obtained based on a transmission end time and a transmission start time of the packet group.

In a fifth implementation, the measurement result includes a traffic volume of the one or more flows passing through the network device.

According to a fourth aspect, a service traffic analysis apparatus is provided. The apparatus may be used in a network management device. The apparatus includes a plurality of functional modules, and the plurality of functional modules interact with each other, to implement the method according to the first aspect and the implementations of the first aspect. The plurality of functional modules may be implemented based on software, hardware, or a combination of software and hardware, and the plurality of functional modules may be randomly combined or divided based on specific implementation.

For example, the apparatus includes but is not limited to an obtaining module, a sending module, a receiving module, and a determining module. Optionally, the apparatus further includes a generation module.

The obtaining module is configured to obtain measurement task information of a service, where the measurement task information includes device identifiers of a plurality of terminal devices associated with the service, the service includes a plurality of service flows, and the plurality of terminal devices include sending devices and receiving devices of the plurality of service flows. The sending module is configured to send measurement commands to a plurality of network devices in a network, where the measurement command indicates a network device that receives the measurement command to collect statistics on a traffic characteristic of one or more flows passing through the network device. The receiving module is configured to receive measurement results sent by the plurality of network devices, where a measurement result sent by each network device includes a traffic characteristic corresponding to a flow identifier of one or more flows passing through the network device, and a flow identifier of each flow includes a device identifier of a sending device of the flow and a device identifier of a receiving device of the flow. The determining module is configured to determine, based on the measurement results sent by the plurality of network devices and the device identifiers of the plurality of terminal devices, a traffic analysis result corresponding to the service.

Optionally, the service is a collective communication or distributed training task.

Optionally, the determining module is configured to: for the measurement result sent by each network device, determine, based on a flow identifier in the measurement result and the device identifiers of the plurality of terminal devices, a service flow that belongs to the service from among the one or more flows passing through the network device; and determine the traffic analysis result based on traffic characteristics of the plurality of service flows in the measurement results sent by the plurality of network devices.

In a first implementation, the plurality of network devices include a first network device, a measurement result sent by the first network device includes a first traffic characteristic of a first service flow, the first service flow is any one of the plurality of service flows, and the first service flow includes a plurality of packet groups respectively used to complete a plurality of data transmissions. The first traffic characteristic includes a transmission start time and a transmission end time of each of the plurality of packet groups, and the determining module is configured to determine a flow completion time of the first service flow in a first statistical period based on a transmission duration of one or more packet groups, among the plurality of packet groups, whose transmission end times are in the first statistical period, where a transmission duration of each packet group is obtained based on a transmission end time and a transmission start time of the packet group. The traffic analysis result includes flow completion times of the plurality of service flows in a plurality of statistical periods, and the first statistical period is any one of the plurality of statistical periods.

In a second implementation, the plurality of network devices include a second network device, a measurement result sent by the second network device includes a second traffic characteristic of a second service flow, the second service flow is any one of the plurality of service flows, and the second service flow includes a plurality of packet groups respectively used to complete a plurality of data transmissions. The second traffic characteristic includes a flow completion time of the second service flow in a second statistical period, the flow completion time of the second service flow in the second statistical period is obtained based on a transmission duration of one or more packet groups, among the plurality of packet groups, whose transmission end times are in the second statistical period, and a transmission duration of each packet group is obtained based on a transmission end time and a transmission start time of the packet group. The traffic analysis result includes flow completion times of the plurality of service flows in a plurality of statistical periods, and the second statistical period is any one of the plurality of statistical periods.

Optionally, a flow completion time of one service flow in a statistical period is a statistical value of transmission durations of all packet groups, in the service flow, whose transmission end times are in the statistical period.

Optionally, with reference to the first implementation or the second implementation, the determining module is further configured to: for any one of the plurality of service flows, if a difference between a flow completion time of the service flow in a third statistical period and a flow completion time of the service flow in a fourth statistical period is greater than a first threshold, determine that transmission quality of the service flow deteriorates, where the third statistical period is later than the fourth statistical period in time sequence. The traffic analysis result further includes an indication for a service flow whose transmission quality deteriorates among the plurality of service flows.

In a third implementation, the plurality of network devices include a third network device, a measurement result sent by the third network device includes a third traffic characteristic of a third service flow, the third service flow is any one of the plurality of service flows, and the third service flow includes a plurality of packet groups respectively used to complete a plurality of data transmissions. The third traffic characteristic includes a transmission start time, a transmission end time, and a traffic volume of each of the plurality of packet groups, and the determining module is configured to determine a throughput of the third network device for the third service flow in a fifth statistical period based on a transmission duration and a traffic volume of one or more packet groups, among the plurality of packet groups, whose transmission end times are in the fifth statistical period, where the transmission duration of each packet group is obtained based on a transmission end time and a transmission start time of the packet group. The traffic analysis result includes throughputs of the plurality of network devices for service flows passing through the plurality of network devices in a plurality of statistical periods, and the fifth statistical period is any one of the plurality of statistical periods.

In a fourth implementation, the plurality of network devices include a fourth network device, a measurement result sent by the fourth network device includes a fourth traffic characteristic of a fourth service flow, the fourth service flow is any one of the plurality of service flows, and the fourth service flow includes a plurality of packet groups respectively used to complete a plurality of data transmissions. The fourth traffic characteristic includes a throughput of the fourth network device for the fourth service flow in a sixth statistical period, the throughput for the fourth service flow in the sixth statistical period is obtained based on a transmission duration and a traffic volume of one or more packet groups, among the plurality of packet groups, whose transmission end times are in the sixth statistical period, and a transmission duration of each packet group is obtained based on a transmission end time and a transmission start time of the packet group. The traffic analysis result includes throughputs of the plurality of network devices for service flows passing through the plurality of network devices in a plurality of statistical periods, and the sixth statistical period is any one of the plurality of statistical periods.

Optionally, with reference to the third implementation or the fourth implementation, the determining module is further configured to: for any one of the plurality of service flows, if a difference between a throughput, of any network device through which the service flow passes, for the service flow in a seventh statistical period and a throughput of the network device for the service flow in an eighth statistical period is greater than a second threshold, determine that transmission quality of the service flow deteriorates, where the eighth statistical period is later than the seventh statistical period in time sequence. The traffic analysis result further includes an indication for a service flow whose transmission quality deteriorates among the plurality of service flows.

Optionally, with reference to any one of the first implementation to the fourth implementation, the sending module is configured to respectively send the measurement commands to a plurality of access network devices in the network, where each access network device is configured to enable one or more of the plurality of terminal devices to access the network.

In a fifth implementation, the measurement result sent by each network device includes a traffic volume of the one or more flows passing through the network device, and the determining module is configured to: for each network device, determine an accumulated traffic volume of the network device for the service based on traffic volumes of all service flows in the measurement result sent by the network device; and determine load balance of the plurality of network devices for the service based on accumulated traffic volumes of the plurality of network devices for the service, where the load balance is negatively correlated with a difference between the accumulated traffic volumes of the plurality of network devices for the service. The traffic analysis result includes the load balance of the plurality of network devices for the service.

Optionally, with reference to the fifth implementation, the sending module is configured to respectively send the measurement commands to all network devices on network paths of the plurality of service flows in the network.

Optionally, the measurement command further includes a measurement indication, and the measurement indication includes one or more of the following: a source IP address set, where the source IP address set includes an IP address of each of one or more of the plurality of terminal devices, and the source IP address set indicates a network device that receives the measurement command to collect statistics on a traffic characteristic of a flow, passing through the network device, whose source IP address belongs to the source IP address set; a destination IP address set, where the destination IP address set includes an IP address of each of one or more of the plurality of terminal devices, and the destination IP address set indicates a network device that receives the measurement command to collect statistics on a traffic characteristic of a flow, passing through the network device, whose destination IP address belongs to the destination IP address set; an ingress indication, where the ingress indication indicates a network device that receives the measurement command to collect statistics on a traffic characteristic of one or more flows received by the network device; an egress indication, where the egress indication indicates a network device that receives the measurement command to collect statistics on a traffic characteristic of one or more flows sent by the network device; and an interface indication, where the interface indication indicates a network device that receives the measurement command to collect statistics on a traffic characteristic of a flow passing through one or more specified interfaces of the network device, the measurement result sent by the network device further includes an interface identifier, and the interface identifier indicates an interface through which the flow passes on the network device. Optionally, the measurement task information further includes a traffic analysis task, and the traffic analysis task indicates a traffic analysis type. The generation module is configured to generate the measurement command based on the traffic analysis task, where a type of a traffic characteristic indicated by the measurement command for statistical collection matches the traffic analysis type indicated by the traffic analysis task. Correspondingly, the determining module is configured to determine, based on the measurement results sent by the plurality of network devices and the device identifiers of the plurality of terminal devices, the traffic analysis result of the service for the traffic analysis type indicated by the traffic analysis task.

Optionally, the obtaining module is configured to receive a service measurement task sent by a service platform, where the service measurement task includes the measurement task information. Optionally, the sending module is further configured to send a service measurement result to the service platform, where the service measurement result includes the traffic analysis result.

Optionally, the plurality of service flows are RDMA flows.

According to a fifth aspect, a service traffic analysis apparatus is provided. The apparatus may be used in a service platform. The apparatus includes a plurality of functional modules, and the plurality of functional modules interact with each other, to implement the method according to the second aspect and the implementations of the second aspect. The plurality of functional modules may be implemented based on software, hardware, or a combination of software and hardware, and the plurality of functional modules may be randomly combined or divided based on specific implementation.

For example, the apparatus includes but is not limited to a sending module and a receiving module. Optionally, the apparatus further includes an output module.

The sending module is configured to send a service measurement task to a network management device, where the service measurement task includes measurement task information of a service, the measurement task information includes device identifiers of a plurality of terminal devices associated with the service, the service includes a plurality of service flows, and the plurality of terminal devices include sending devices and receiving devices of the plurality of service flows. The receiving module is configured to receive a service measurement result sent by the network management device, where the service measurement result includes a traffic analysis result corresponding to the service.

Optionally, the service is a collective communication or distributed training task.

Optionally, the output module is configured to output the traffic analysis result.

According to a sixth aspect, a service traffic analysis apparatus is provided. The apparatus may be used in a network device. The apparatus includes a plurality of functional modules, and the plurality of functional modules interact with each other, to implement the method according to the third aspect and the implementations of the third aspect. The plurality of functional modules may be implemented based on software, hardware, or a combination of software and hardware, and the plurality of functional modules may be randomly combined or divided based on specific implementation.

For example, the apparatus includes but is not limited to a receiving module, a processing module, and a sending module.

The receiving module is configured to receive a measurement command sent by a network management device, where the measurement command indicates the network device to collect statistics on a traffic characteristic of one or more flows passing through the network device. The processing module is configured to collect, based on the measurement command, statistics on the traffic characteristic of the one or more flows passing through the network device. The sending module is configured to send a measurement result to the network management device, where the measurement result includes a traffic characteristic corresponding to a flow identifier of the one or more flows passing through the network device, and a flow identifier of each flow includes a device identifier of a sending device of the flow and a device identifier of a receiving device of the flow.

Optionally, the measurement command further includes a measurement indication, and the measurement indication includes one or more of the following: a source IP address set, where the source IP address set includes one or more IP addresses, and the source IP address set indicates the network device to collect statistics on a traffic characteristic of a flow, passing through the network device, whose source IP address belongs to the source IP address set; a destination IP address set, where the destination IP address set includes one or more IP addresses, and the destination IP address set indicates the network device to collect statistics on a traffic characteristic of a flow, passing through the network device, whose destination IP address belongs to the destination IP address set; an ingress indication, where the ingress indication indicates the network device to collect statistics on a traffic characteristic of one or more flows received by the network device; an egress indication, where the egress indication indicates the network device to collect statistics on a traffic characteristic of one or more flows sent by the network device; and an interface indication, where the interface indication indicates the network device to collect statistics on a traffic characteristic of a flow passing through one or more specified interfaces of the network device, the measurement result sent by the network device further includes an interface identifier, and the interface identifier indicates an interface through which the flow passes on the network device.

Optionally, a measurement result includes a first traffic characteristic of a first flow. The first flow is any flow in the one or more flows, the first flow includes a plurality of packet groups respectively used to complete a plurality of data transmissions, and the first traffic characteristic includes a transmission start time and a transmission end time of each of the plurality of packet groups.

Optionally, a measurement result includes a second traffic characteristic of a second flow. The second flow is any flow in the one or more flows passing through the network device, the second flow includes a plurality of packet groups respectively used to complete a plurality of data transmissions, and the second traffic characteristic includes a flow completion time of the second flow in one or more statistical periods. A flow completion time of the second flow in each statistical period is obtained based on a transmission duration of one or more packet groups, among the plurality of packet groups, whose transmission end times are in the statistical period. A transmission duration of each packet group is obtained based on a transmission end time and a transmission start time of the packet group.

Optionally, a measurement result includes a third traffic characteristic of a third flow. The third flow is any flow in the one or more flows, the third flow includes a plurality of packet groups respectively used to complete a plurality of data transmissions, and the third traffic characteristic includes a transmission start time, a transmission end time, and a traffic volume of each of the plurality of packet groups.

Optionally, a measurement result includes a fourth traffic characteristic of a fourth flow. The fourth flow is any flow in the one or more flows, the fourth flow includes a plurality of packet groups respectively used to complete a plurality of data transmissions, and the fourth traffic characteristic includes a throughput of the network device for the fourth flow in one or more statistical periods. A throughput for the fourth flow in each statistical period is obtained based on a transmission duration and a traffic volume of one or more packet groups, among the plurality of packet groups, whose transmission end times are in the statistical period. A transmission duration of each packet group is obtained based on a transmission end time and a transmission start time of the packet group.

Optionally, the measurement result includes a traffic volume of the one or more flows.

According to a seventh aspect, a service traffic analysis apparatus is provided. The apparatus may be a network management device and includes a processor and a memory.

The memory is configured to store a computer program, and the computer program includes program instructions.

The processor is configured to invoke the computer program to implement the method according to the first aspect and the implementations of the first aspect.

According to an eighth aspect, a service traffic analysis apparatus is provided. The apparatus may be a service platform and includes a processor and a memory.

The memory is configured to store a computer program, and the computer program includes program instructions.

The processor is configured to invoke the computer program to implement the method according to the first aspect and the implementations of the second aspect.

According to a ninth aspect, a service traffic analysis apparatus is provided. The apparatus may be a network device and includes a processor and a memory.

The memory is configured to store a computer program, and the computer program includes program instructions.

The processor is configured to invoke the computer program to implement the method according to the first aspect and the implementations of the third aspect.

According to a tenth aspect, a service traffic analysis system is provided, including a network management device and a plurality of network devices. The network management device is configured to perform the method according to the first aspect and the implementations of the first aspect, and the network device is configured to perform the method according to the third aspect and the implementations of the third aspect.

Optionally, the system further includes a service platform, and the service platform is configured to perform the method according to the second aspect and the implementations of the second aspect. According to an eleventh aspect, a computer-readable storage medium is provided. The computer-readable storage medium stores instructions. When the instructions are executed by a processor of a network management device, the method according to the first aspect and the implementations of the first aspect is implemented; or when the instructions are executed by a processor of a service platform, the method according to the second aspect and the implementations of the second aspect is implemented; or when the instructions are executed by a processor of a network device, the method according to the third aspect and the implementations of the third aspect is implemented. According to a twelfth aspect, a computer program product is provided, including a computer program. When the computer program is executed by a processor, the method according to the first aspect and the implementations of the first aspect is implemented, or the method according to the second aspect and the implementations of the second aspect is implemented, or the method according to the third aspect and the implementations of the third aspect is implemented.

According to a thirteenth aspect, a chip is provided. The chip includes a programmable logic circuit and/or program instructions. When the chip runs, the method according to the first aspect and the implementations of the first aspect is implemented, or the method according to the second aspect and the implementations of the second aspect is implemented, or the method according to the third aspect and the implementations of the third aspect is implemented.

### BRIEF DESCRIPTION OF DRAWINGS

FIG. 1 is a view of a distributed training task according to an embodiment of this application;
FIG. 2 is a diagram of an implementation scenario according to an embodiment of this application;
FIG. 3 is a schematic flowchart of a service traffic analysis method according to an embodiment of this application;
FIG. 4 is a diagram of a synchronization measurement result according to an embodiment of this application;
FIG. 5 is a diagram of a throughput performance measurement result according to an embodiment of this application;
FIG. 6 is a schematic flowchart of another service traffic analysis method according to an embodiment of this application;
FIG. 7 is a diagram of a structure of a service traffic analysis apparatus according to an embodiment of this application;
FIG. 8 is a diagram of a structure of another service traffic analysis apparatus according to an embodiment of this application;
FIG. 9 is a diagram of a structure of still another service traffic analysis apparatus according to an embodiment of this application;
FIG. 10 is a diagram of a hardware structure of a network device according to an embodiment of this application; and
FIG. 11 is a diagram of a hardware structure of a network management device/service platform according to an embodiment of this application.

### DESCRIPTION OF EMBODIMENTS

To make objectives, technical solutions, and advantages of this application clearer, the following further describes implementations of this application in detail with reference to the accompanying drawings.

In a current network, service traffic interruption or congestion often occurs due to network environment, manual operations, or device defects. These service traffic transmission problems directly affect service quality. Most services (for example, distributed training tasks, financial services, and banking services) are sensitive to quality issues. Therefore, it is necessary to analyze a transmission status of service traffic on the network. In this way, after transmission interruption or congestion occurs in service traffic, fault locating or congestion locating can be performed in time, and then corresponding isolation or recovery measures are taken for related network devices or transmission links.

Currently, network measurement focuses on statistics related to network traffic, bandwidth, explicit congestion notification (explicit congestion notification, ECN), and priority flow control (priority flow control, PFC). Currently, network measurement is mostly performed at a granularity of a flow. For example, a 2-tuple, a 4-tuple, or a 5-tuple may be used to identify a flow. A network management device may capture, from a network device, a 2-tuple, a 4-tuple, or a 5-tuple of a packet passing through the network device, to determine a flow to which the packet belongs. With reference to a network device through which a packet of the flow passes in the network, a traffic volume, a network path, link bandwidth, whether congestion occurs, whether a PFC mechanism is enabled, and the like of the flow may be determined. The 2-tuple includes a source IP address and a destination IP address. The 4-tuple includes a source IP address, a destination IP address, a source port, and a destination port. The 5-tuple includes a source IP address, a destination IP address, a source port, a destination port, and a transport layer protocol.

However, in some scenarios, overall service quality analysis is necessary. Flow-based network measurement cannot meet requirements for overall quality monitoring on a service with a plurality of flows. For example, if a service involves a plurality of source ends and/or a plurality of destination ends, a plurality of flows of the service have a plurality of transmission paths in the network. Currently, there is no solution to perform flow-based network measurement on a plurality of flows of a service to analyze overall network traffic of the service.

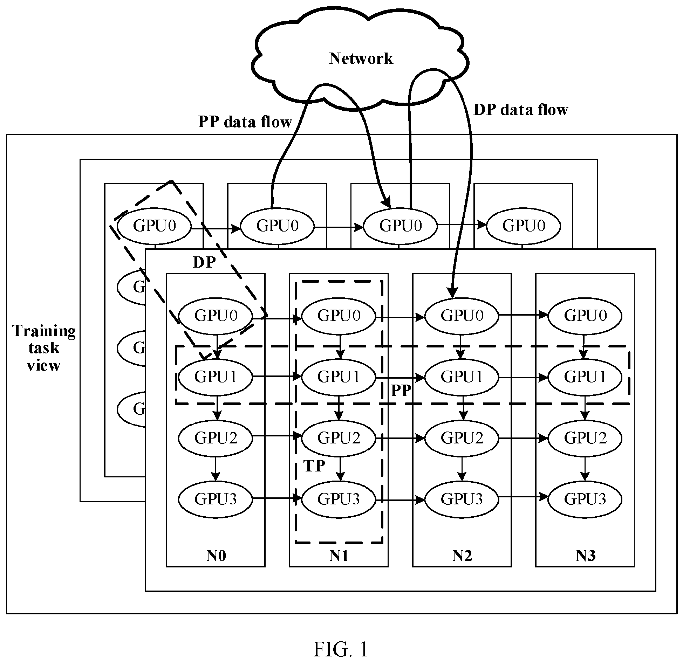

For example, as a distributed compute task, the distributed training task is a typical service involving a plurality of service flows. With the development of artificial intelligence (artificial intelligence, AI) and big data technologies, more compute resources and data resources are available for models, and a model parameter scale and computing requirements are increasing. Model training becomes a highly intensive and time-consuming task. Distributed training has become a mainstream technology for improving model training efficiency. The distributed training task usually involves a plurality of compute nodes, and each compute node has some data and a model parameter. The plurality of compute nodes need to exchange data through a network, to jointly perform model training. Currently, there are two basic solutions for distributed parallel training of models: data parallelism (data parallelism, DP) and model parallelism (model parallelism, MP). The model parallel solution is classified into two types based on a model partitioning mode: pipeline parallelism (pipeline parallelism, PP) and tensor parallelism (tensor parallelism, TP). In data parallelism, a batch of training data is evenly distributed to a plurality of compute nodes. Each compute node maintains a complete model replica. After each training, gradient synchronization communication is required between the compute nodes to ensure that models stored on all the compute nodes have same parameters. In model parallelism, a model is partitioned and placed on a plurality of compute nodes to reduce memory usage during model training. In pipeline parallelism, a model is partitioned by layer, while in tensor parallelism, a complex intra-layer tensor partitioning mode is used. The data parallelism (DP) phase and the pipeline parallelism (PP) phase involve communication (inter-machine communication) between different compute nodes, and the tensor parallelism (TP) phase involves communication (intra-machine communication) between different processing units in a single compute node. For example, FIG. 1 is a view of a distributed training task according to an embodiment of this application. As shown in FIG. 1, the distributed training task involves four compute nodes, which are respectively denoted as compute nodes N0 to N3. Each compute node Nx (where x is any integer ranging from 0 to 3) includes four graphics processing units (graphics processing unit, GPU), which are denoted as GPU0 to GPU3. In the DP phase, a part of training data is allocated to each compute node Nx, and gradient synchronization communication is performed between a plurality of compute nodes through the network. In the PP phase, a plurality of compute nodes exchange model data through the network. In the TP phase, model data is exchanged between a plurality of GPUs in the compute node by using a bus technology. The bus technology may be, for example, a peripheral component interconnect express (peripheral component interconnect express, PCIe) technology or an Nvlink technology.

In the distributed training task, data exchange between compute nodes is usually implemented through collective communication (collective communication). One distributed training task may include one or more times of collective communication. Collective communication refers to coordinated communication between a plurality of processes in a distributed computing environment to complete specific tasks. Because a round of collective communication involves a plurality of interaction operations between compute nodes, the collective communication can succeed and a distributed training task can continue to be executed only after all compute nodes that participate in the collective communication complete the interaction process. Otherwise, the distributed training task becomes slow or is suspended. In view of this, it is necessary to perform network measurement at a granularity of a distributed training task or a granularity of collective communication.

This application provides a technical solution, to implement network measurement at a granularity of a service. In this technical solution, the network management device obtains measurement task information of the service, and delivers measurement commands to a plurality of network devices in the network, to indicate each network device that receives the measurement command to collect statistics on a traffic characteristic of one or more flows passing through the network device. The service includes a plurality of service flows, the measurement task information of the service includes device identifiers of a plurality of terminal devices associated with the service, and the plurality of terminal devices include sending devices and receiving devices of the plurality of service flows. After receiving measurement results reported by the plurality of network devices, the network management device determines, based on the measurement results sent by the plurality of network devices and the device identifiers of the plurality of terminal devices, a traffic analysis result corresponding to the service. A measurement result sent by each network device includes a traffic characteristic corresponding to a flow identifier of one or more flows passing through the network device. A flow identifier of each flow includes a device identifier of a sending device of the flow and a device identifier of a receiving device of the flow. In this application, the network management device collects traffic characteristics corresponding to flow identifiers of flows passing through the plurality of network devices in the network, so that for a service with a plurality of service flows, the network management device can determine the plurality of service flows of the service based on the collected flow identifiers and device identifiers in measurement task information of the service, and then determine, based on traffic characteristics of the plurality of service flows, a traffic analysis result corresponding to the service, to implement network measurement at a per-service granularity. This helps monitor and analyze service quality.

In this application, the terminal device associated with the service is a terminal device that sends and/or receives one or more service flows of the service. Optionally, the service in this application is a collective communication or distributed training task. In a scenario in which the service is collective communication, the plurality of terminal devices associated with the service are a plurality of compute nodes that participate in the collective communication, and the plurality of compute nodes belong to one collective communication domain. Correspondingly, the device identifier in the measurement task information is used to limit all compute resources involved in the collective communication. Alternatively, in a scenario in which the service is a distributed training task, the terminal device associated with the service is a compute node participating in the distributed training task, and the device identifier in the measurement task information is used to limit all compute resources related to the distributed training task. Optionally, one distributed training task usually includes collective communication in a plurality of phases, and compute resources involved in collective communication in different phases may be the same or may be different. In other words, one distributed training task may correspond to one or more collective communication domains. The traffic analysis result in this application may be presented at a granularity of collective communication. For example, for a distributed training task including a plurality of times of collective communication, a traffic analysis result corresponding to the distributed training task may include traffic analysis results respectively corresponding to the plurality of times of collective communication.

The technical solutions in this application are described in detail below from a plurality of perspectives such as an implementation scenario, a method procedure, a software apparatus, and a hardware apparatus.

An implementation scenario of embodiments of this application is described below by using an example.

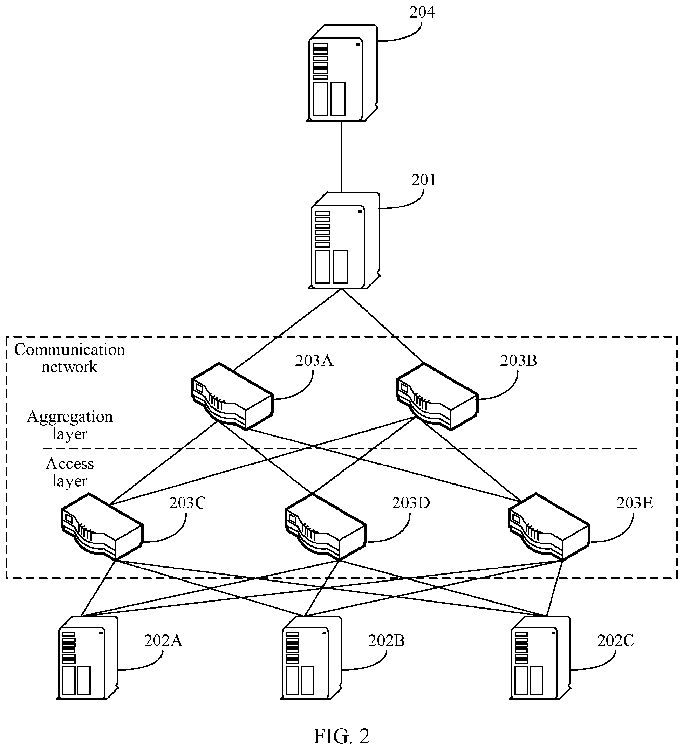

For example, FIG. 2 is a diagram of an implementation scenario according to an embodiment of this application. As shown in FIG. 2, the implementation scenario includes a network management device 201, a plurality of terminal devices 202A to 202C (collectively referred to as a terminal device 202), and a plurality of network devices 203A to 203E (collectively referred to as a network device 203) in a communication network. A quantity of terminal devices and a quantity of network devices in FIG. 2 are merely used as examples for description, and are not intended to limit the implementation scenario of embodiments of this application.

The network management device 201 may be a server, a server cluster including several servers, a cloud computing platform, or a network controller. The terminal device 202 may be a physical device like a host or a server, or may be a logical device like a virtual machine that is obtained by virtualizing a compute resource of a computer device. The network device 203 may be a switch, a router, a firewall, or the like. The network management device 201 is connected to the network device 203 via a wired network or a wireless network. The network management device 201 is configured to manage the network device 203 in the communication network. For example, the network management device 201 may deliver a measurement command to the network device 203, to indicate the network device 203 to collect statistics on a traffic characteristic of one or more flows passing through the network device, and receive and process a measurement result from the network device 203. The plurality of terminal devices 202 communicate with each other through one or more network devices 203 in the communication network.

Optionally, when the implementation scenario shown in FIG. 2 is a distributed training task scenario or a collective communication scenario, the terminal device 202 is a compute node. The compute node may include one or more processors of a central processing unit (central processing unit, CPU), a GPU, a tensor processing unit (tensor processing unit, TPU), or a neural processing unit (neural processing unit, NPU). The compute node may be a server having a computing capability.

The communication network provided in this embodiment of this application may be a data center network (data center network, DCN), a metropolitan area network, a wide area network, a campus network, a virtual local area network (virtual local area network, VLAN), a virtual extensible local area network (virtual extensible local area network, VXLAN), or the like. A type of the communication network is not limited in embodiments of this application. For example, the communication network may be, for example, an RDMA over converged Ethernet (RDMA over converged Ethernet, RoCE) network.

Optionally, the communication network provided in this embodiment of this application may be of a two-layer network architecture. The communication network includes an aggregation layer and an access layer. The communication network may also be referred to as a two-layer network. The aggregation layer is a high-speed switching backbone of the communication network, and the access layer is configured to enable the terminal device to access the communication network. A network device located at the access layer may be referred to as an access network device, and a network device located at the aggregation layer may be referred to as an aggregation network device. For example, refer to FIG. 2. The network device 203A and the network device 203B are located at the aggregation layer, and are aggregation network devices. The network device 203C, the network device 203D, and the network device 203E are located at the access layer, and are access network devices. Each terminal device 202 is connected to the network device 203C, the network device 203D, and the network device 203E. The network device 203C, the network device 203D, and the network device 203E are connected to the network device 203A and the network device 203B. The communication network of a two-layer network architecture may be, for example, a fat-tree (fat-tree) network, which is also referred to as a leaf-spine (leaf-spine) network. Alternatively, the communication network provided in this embodiment of this application may be of a three-layer network architecture. In the three-layer network architecture, the communication network includes a core layer, an aggregation layer, and an access layer. The communication network may also be referred to as a three-layer network. The core layer is a high-speed switching backbone of the communication network, the aggregation layer is configured to provide an aggregation connection (connecting the access layer and the core layer), and the access layer is configured to enable the terminal device to access the communication network.

Optionally, still refer to FIG. 2. The implementation scenario further includes a service platform 204. The service platform 204 may be a server, a server cluster including several servers, or a cloud computing platform. The service platform 204 is configured to provide a human-machine interaction interface. Optionally, the service platform 204 includes a scheduling module, a tenant management module, and an operation and maintenance monitoring module. The scheduling module is configured to allocate compute resources to services. The tenant management module is configured to manage tenant information. The operation and maintenance monitoring module is configured to monitor service quality. The service platform 204 is connected to the network management device 201 via a wired network or a wireless network. The service platform 204 may send a service measurement task to the network management device 201, and receive and display a service measurement result sent by the network management device 201. Optionally, the service platform 204 may be an AI service operation and maintenance platform.

The following describes a method procedure in embodiments of this application by using an example.

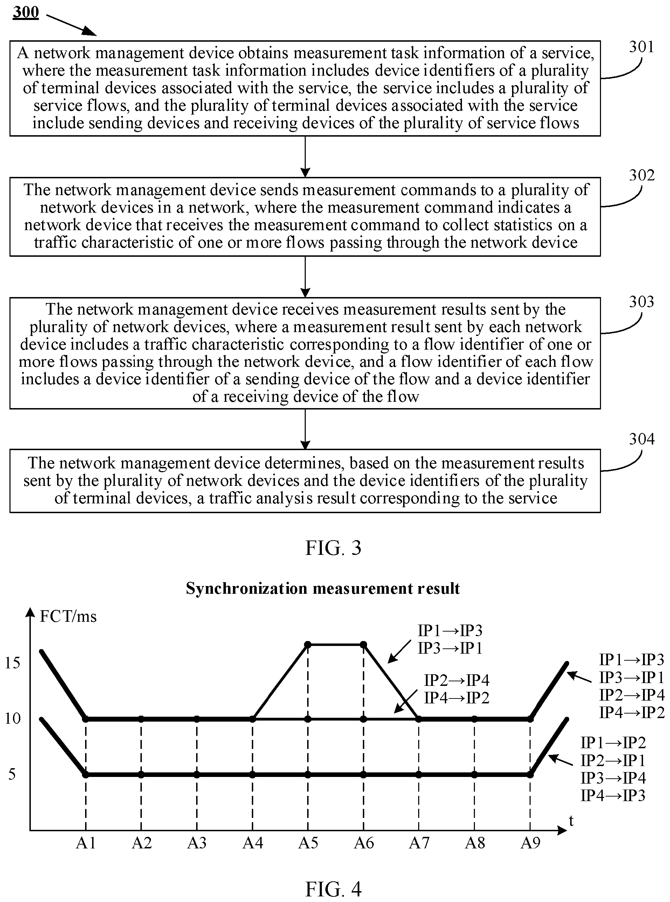

For example, FIG. 3 is a schematic flowchart of a service traffic analysis method according to an embodiment of this application. As shown in FIG. 3, the method 300 includes but is not limited to the following step 301 to step 304. The method 300 may be applied to the network management device 201 in the implementation scenario shown in FIG. 2.

Step 301: The network management device obtains measurement task information of a service, where the measurement task information includes device identifiers of a plurality of terminal devices associated with the service, the service includes a plurality of service flows, and the plurality of terminal devices associated with the service include sending devices and receiving devices of the plurality of service flows.

Optionally, the device identifier of the terminal device may be represented by using an IP address of the terminal device. Alternatively, the device identifier of the terminal device may be represented by using an IP address of the terminal device and an identifier of a port associated with the service on the terminal device. For example, one terminal device is associated with a plurality of services, different services use different ports of the terminal device, and the IP address and the identifier of the port are used as device identifiers to distinguish resources provided by a same terminal device for different services. Alternatively, the terminal device virtualizes a compute resource of a computer device to obtain a virtual resource, and the device identifier of the terminal device may be represented by using a virtual resource identifier. The virtual resource identifier is, for example, an IP address allocated to the virtual resource. A manner of representing the device identifier of the terminal device is not limited in embodiments of this application. In the following embodiments, an example in which the device identifier of the terminal device is represented by using an IP address of the terminal device is used for description. Correspondingly, the measurement task information includes respective IP addresses of the plurality of terminal devices associated with the service, where these IP addresses may be source IP addresses of the service flows of the service, or may be destination IP addresses of the service flows of the service.

Optionally, the service flow of the service is an RDMA flow. RDMA is a message (message)-based transmission protocol. In this embodiment of this application, a service flow may be identified by using a source IP address and a destination IP address. One service flow usually includes a plurality of packet groups respectively used to complete a plurality of data transmissions. When a data amount of a single data transmission is large, data usually needs to be split and transmitted by using a plurality of packets. The plurality of packets are a packet group used to complete the data transmission. For the RDMA flow, completing one data transmission means completing transmission of one message. One message is split into a plurality of packets for transmission, where the first one is a first packet, and the last one is a last packet. A network device can identify one data transmission based on the received first packet and last packet.

Optionally, the measurement task information further includes a traffic analysis task, and the traffic analysis task indicates a traffic analysis type. Optionally, the traffic analysis task indicates to analyze one or more of the following: time synchronization of a plurality of service flows of a same service (where the time synchronization reflects whether flow completion times of the plurality of service flows change with time), throughput performance of a network device in a network for a plurality of service flows of a same service, and load balance of a plurality of network devices in the network for a service. The traffic analysis task may further indicate to analyze network paths of a plurality of service flows of a same service in the network, and the like.

Optionally, the service is a distributed training task or collective communication, and the distributed training task includes one or more times of collective communication. Because collective communication is characterized by high bandwidth per flow, a synchronous burst, and communication efficiency depending on the slowest flow, time synchronization of a plurality of flows in collective communication, throughput performance of a network device for each flow in collective communication, load balance of a plurality of network devices for collective communication, and the like are measured, thereby helping analyze communication quality of collective communication.

Optionally, the network management device may obtain the measurement task information of the service in a plurality of manners. For example, the network management device receives a service measurement task sent by a service platform, and the service measurement task includes the measurement task information of the service; the measurement task information of the service is manually input into the network management device; or the network management device actively obtains the measurement task information of the service after a service fault occurs.

Step 302: The network management device sends measurement commands to a plurality of network devices in the network, where the measurement command indicates a network device that receives the measurement command to collect statistics on a traffic characteristic of one or more flows passing through the network device.

Optionally, the measurement command may indicate a specific type of the traffic characteristic that the network device needs to collect statistics on. For example, one flow includes a plurality of packet groups respectively used to complete a plurality of data transmissions. The traffic characteristic indicated by the measurement command for statistical collection on includes a start time and an end time of each data transmission; the traffic characteristic indicated by the measurement command for statistical collection includes a flow completion time; the traffic characteristic indicated by the measurement command for statistical collection includes a start time, an end time, and a traffic volume of each data transmission; the traffic characteristic indicated by the measurement command for statistical collection includes a throughput; or the traffic characteristic indicated by the measurement command for statistical collection includes a traffic volume.

Optionally, when the measurement task information includes the traffic analysis task, the network management device may generate the measurement command based on the traffic analysis task, and the traffic characteristic indicated by the measurement command for statistical collection matches the traffic analysis type indicated by the traffic analysis task. For example, the traffic analysis task indicates to analyze time synchronization of the plurality of service flows of the service. Correspondingly, the traffic characteristic indicated by the measurement command for statistical collection includes a start time and an end time of each data transmission in the flow, or a flow completion time. For another example, the traffic analysis task indicates to analyze throughput performance of the network device in the network for the plurality of service flows of the service. Correspondingly, the traffic characteristic indicated by the measurement command for statistical collection includes a start time, an end time, and a traffic volume of each data transmission in the flow, or a throughput. For another example, the traffic analysis task indicates to analyze load balance of the plurality of network devices in the network for the service. Correspondingly, the traffic characteristic indicated by the measurement command for statistical collection includes a traffic volume.

Alternatively, a specific type of the traffic characteristic whose statistics needs to be collected may be preconfigured in the network device, and the measurement command is used to trigger the network device to start statistics collection on the traffic characteristic, but does not indicate the specific type of the traffic characteristic that the network device needs to collect statistics on.

Optionally, the measurement command further includes a measurement indication, and the measurement indication includes one or more of the following: a source IP address set, a destination IP address set, an ingress indication, an egress indication, or an interface indication. Optionally, the device identifiers of the plurality of terminal devices in the measurement task information are represented by using IP addresses, and the source IP address set and the destination IP address set each include an IP address of each of one or more of the plurality of terminal devices. The source IP address set indicates a network device that receives the measurement command to collect statistics on a traffic characteristic of a flow, passing through the network device, whose source IP address belongs to the source IP address set. If the measurement command does not include the source IP address set, the network device does not perform source IP address-based filtering on the flow passing through the network device, but collects statistics on a traffic characteristic of a flow with any source IP address passing through the network device.

The destination IP address set indicates a network device that receives the measurement command to collect statistics on a traffic characteristic of a flow, passing through the network device, whose destination IP address belongs to the destination IP address set. If the measurement command does not include the destination IP address set, the network device does not perform destination IP address-based filtering on the flow passing through the network device, but collects statistics on a traffic characteristic of a flow with any destination IP address passing through the network device. The ingress indication indicates a network device that receives the measurement command to collect statistics on a traffic characteristic of one or more flows received by the network device.

The egress indication indicates a network device that receives the measurement command to collect statistics on a traffic characteristic of one or more flows sent by the network device.

If the measurement command includes only the ingress indication, the network device collects statistics on only the traffic characteristic of the one or more flows received by the network device. If the measurement command includes only the egress indication, the network device collects statistics on only the traffic characteristic of the one or more flows sent by the network device. If the measurement command includes neither the ingress indication nor the egress indication, or the measurement command includes both the ingress indication and the egress indication, the network device collects statistics on both the traffic characteristic of the one or more flows received by the network device and the traffic characteristic of the one or more flows sent by the network device. The interface indication indicates a network device that receives the measurement command to collect statistics on a traffic characteristic of a flow passing through one or more specified interfaces of the network device. If the measurement command does not include the interface indication, the network device collects statistics on a traffic characteristic of a flow passing through all interfaces of the network device.

In embodiments of this application, the network management device includes the measurement indication in the measurement command, so that the network device collects statistics on traffic characteristics of some flows in a targeted manner, thereby reducing statistics collection on a traffic characteristic of an unwanted flow by the network device, and saving processing resources of the network device.

Optionally, the measurement command may further include validity time of the measurement task, for example, indicating that the measurement task is permanently valid or valid for a period of time. When the measurement command indicates permanent validity, before receiving a measurement end command sent by the network management device, the network device always remains in an operating state of collecting statistics on a traffic characteristic of a flow passing through the network device. When the measurement command indicates validity for a period of time, the network device collects statistics on a traffic characteristic of a flow passing through the network device only in a validity period, and the network device automatically stops executing the traffic statistics task after the validity period expires.

Step 303: The network management device receives measurement results sent by the plurality of network devices, where a measurement result sent by each network device includes a traffic characteristic corresponding to a flow identifier of one or more flows passing through the network device, and a flow identifier of each flow includes a device identifier of a sending device of the flow and a device identifier of a receiving device of the flow.

Optionally, after receiving the measurement command sent by the network management device, the network device collects, based on the measurement command, statistics on the traffic characteristic of the one or more flows passing through the network device, and then sends, to the network management device, a measurement result corresponding to the measurement command. Optionally, if the flow passing through the network device is an RDMA flow, the flow identifier may further include a queue pair (queue pair, QP) number. For example, the flow identifier may be represented by using a source IP address of the flow, a destination IP address of the flow, and a QP number. When a packet is transmitted between terminal devices based on an RDMA protocol, the two communication parties first need to establish a QP, where a sender establishes a send queue (send queue, SQ), and a receiver establishes a receive queue (receive queue, RQ); and the two communication parties communicate with each other based on the QP. Because one terminal device may be associated with a plurality of services, when an IP address of the terminal device is used as a device identifier of the terminal device, if two services have service flows with a same source IP address and a same destination IP address, the network management device cannot distinguish service flows of different services based on source IP addresses and destination IP addresses. However, QPs need to be established between the terminal devices for different services to transmit packets of the services, and QP numbers of different services are usually different. Therefore, the network device adds QP numbers to flow identifiers reported to the network management device, so that the network management device can distinguish service flows, of different services, with a same source IP address and a same destination IP address based on the flow identifiers.

Optionally, when the measurement command sent by the network management device to the network device in step 302 includes the interface indication, the measurement result sent by the network device to the network management device may further include an interface identifier, where the interface identifier indicates an interface through which a corresponding flow passes on the network device.

Optionally, the measurement result sent by the network device to the network management device further includes a device identifier of the network device. The device identifier of the network device may be, for example, information that can uniquely identify the network device, like an IP address of the network device, a media access control (Media Access Control, MAC) address of the network device, or a hardware address of the network device.

Step 304: The network management device determines, based on the measurement results sent by the plurality of network devices and the device identifiers of the plurality of terminal devices, a traffic analysis result corresponding to the service.

Optionally, an implementation of step 304 includes: For a measurement result sent by each network device, the network management device determines, based on a flow identifier in the measurement result and the device identifiers of the plurality of terminal devices associated with the service in the measurement task information, a service flow that belongs to the service from among one or more flows passing through the network device. The network management device determines, based on traffic characteristics of the plurality of service flows in the measurement results sent by the plurality of network devices, the traffic analysis result corresponding to the service. The network management device may determine, as the service flow of the service, a flow whose sending device and receiving device both belong to the plurality of terminal devices.

In embodiments of this application, the network management device collects traffic characteristics corresponding to flow identifiers of flows passing through the plurality of network devices in the network, so that for a service with a plurality of service flows, the network management device can determine the plurality of service flows of the service based on the collected flow identifiers and device identifiers in measurement task information of the service, and then determine, based on traffic characteristics of the plurality of service flows, a traffic analysis result corresponding to the service, to implement network measurement at a per-service granularity. This helps monitor and analyze service quality.

Optionally, when the measurement task information includes the traffic analysis task, the network management device determines, based on the measurement results sent by the plurality of network devices and the device identifiers of the plurality of terminal devices associated with the service in the measurement task information, the traffic analysis result of the service for the traffic analysis type indicated by the traffic analysis task.

In the following embodiments of this application, traffic characteristics that the network device collects statistics on and traffic analysis results determined by the network management device in different traffic analysis tasks are respectively described by using examples.

**In a first possible case,** the traffic analysis task indicates to analyze time synchronization of the plurality of service flows of the service. Correspondingly, the traffic analysis result includes a synchronization measurement result, and the synchronization measurement result includes flow completion times of the plurality of service flows of the service in a plurality of statistical periods. Optionally, the plurality of statistical periods are continuous in time sequence, that is, an end time of a previous statistical period is a start time of a next statistical period. Alternatively, the plurality of statistical periods are discontinuous in time sequence, that is, a start time of a next statistical period is later than an end time of a previous statistical period.

In this embodiment of this application, flow completion times of a plurality of service flows of a same service in the plurality of statistical periods are measured, and changes of the flow completion times of the plurality of service flows with time are presented at a per-service granularity. A change of a flow completion time of a single service flow with time can reflect a change of transmission quality of the service flow, and the changes of the flow completion times of the plurality of service flows with time can reflect a change of overall service transmission quality. This helps operation and maintenance personnel analyze whether the overall service transmission quality deteriorates and a specific service flow that causes the deterioration of the service transmission quality. Collective communication is used as an example. Because collective communication is characterized by a synchronous burst and communication efficiency depending on the slowest flow, statistics on changes of flow completion times of all service flows in a round of collective communication with time are collected, so that whether communication quality of collective communication is stable can be determined, and whether a flow completion time of a service flow is excessively long, causing low collective communication efficiency can be determined. In this way, the communication quality of the collective communication is analyzed at different granularities.

Optionally, for any one of the plurality of service flows of the service, if a difference between a flow completion time of the service flow in a third statistical period and a flow completion time of the service flow in a fourth statistical period is greater than a first threshold, the network management device determines that transmission quality of the service flow deteriorates. The third statistical period is later than the fourth statistical period in time sequence. In other words, if a flow completion time of a service flow becomes longer, it indicates that transmission quality of the service flow deteriorates. Correspondingly, the synchronization measurement result may further include an indication for a service flow whose transmission quality deteriorates among the plurality of service flows of the service. An indication for one service flow may include a device identifier of a sending device of the service flow (for example, a source IP address of the service flow) and a device identifier of a receiving device (for example, a destination IP address of the service flow). An indication for one service flow may further include a transmission path of the service flow in the network, and the like. In this way, a network location at which transmission quality of the service flow deteriorates can be checked on the transmission path of the service flow, helping improve analysis efficiency.

In a first implementation of the first possible case, the measurement command sent by the network management device to the plurality of network devices may indicate that a traffic characteristic whose statistics are collected includes a start time and an end time of each data transmission in a flow, or the network device is preconfigured to collect statistics on a start time and an end time of each data transmission in a flow passing through the network device. Correspondingly, the measurement result sent by the network device to the network management device includes a start time and an end time of each data transmission in one or more flows passing through the network device. For example, the plurality of network devices that receive the measurement command include a first network device. The first network device is any one of the plurality of network devices. A measurement result sent by the first network device to the network management device includes a first traffic characteristic of a first service flow. The first service flow is any one of the plurality of service flows of the service, and the first service flow includes a plurality of packet groups respectively used to complete a plurality of data transmissions. The first traffic characteristic includes a transmission start time and a transmission end time of each of the plurality of packet groups. In this implementation, the network management device may determine a flow completion time of the first service flow in a first statistical period based on a transmission duration of one or more packet groups, among the plurality of packet groups, whose transmission end times are in the first statistical period. A transmission duration of each packet group is obtained based on a transmission end time and a transmission start time of the packet group. A transmission duration of one packet group is completion time of one data transmission, and may be equal to a value obtained by subtracting a transmission start time from a transmission end time of the packet group. The first statistical period is any one of the plurality of statistical periods. For a manner of determining a flow completion time of the first service flow in another statistical period and a manner of determining a flow completion time of another service flow in the plurality of statistical periods, refer to the manner of determining the flow completion time of the first service flow in the first statistical period. Details are not described in this embodiment of this application again. Optionally, a flow completion time of one service flow in a statistical period is a statistical value of transmission durations of all packet groups, in the service flow, whose transmission end times are in the statistical period. The statistical value includes but is not limited to an average value, a median value, a maximum value, or a quantile value. For example, that the network management device determines the flow completion time of the first service flow in the first statistical period based on the transmission duration of the one or more packet groups, among the plurality of packet groups, whose transmission end times are in the first statistical period may be as follows: The network management device uses, as the flow completion time of the first service flow in the first statistical period, a statistical value of transmission durations of all packet groups, among the plurality of packet groups of the first service flow, whose transmission end times are in the first statistical period.

In this implementation, the network device only needs to collect statistics on a start time and an end time of each data transmission in a flow passing through the network device, and the network management device performs traffic analysis on the service based on a traffic characteristic reported by the network device, to determine the flow completion times of the plurality of service flows of the service in the plurality of statistical periods. This implementation sets low requirements on processing performance of the network device.

Optionally, the network device may periodically send a measurement result to the network management device in the validity period of the measurement task. The measurement result includes a start time and an end time of a data transmission completed in the current period in one or more flows passing through the network device. For example, three data transmissions are completed in the current period in a flow 1 passing through a network device 1, and the three data transmissions correspond to three packet groups, namely, a packet group 11, a packet group 12, and a packet group 13. A transmission start time of the packet group 11 is T11, and a transmission end time of the packet group 11 is T12. A transmission start time of the packet group 12 is T13, and a transmission end time of the packet group 12 is T14. A transmission start time of the packet group 13 is T15, and a transmission end time of the packet group 13 is T16. Two data transmissions are completed in the current period in a flow 2 passing through the network device 1, and the two data transmissions correspond to two packet groups, namely, a packet group 21 and a packet group 22. A transmission start time of the packet group 21 is T21, and a transmission end time of the packet group 21 is T22. A transmission start time of the packet group 22 is T23, and a transmission end time of the packet group 22 is T24. A source IP address of the flow 1 is IP1, and a destination IP address of the flow 1 is IP2. A source IP address of the flow 2 is IP3, and a destination IP address of the flow 2 is IP4. In this case, a measurement result sent by the network device 1 to the network management device may be shown in Table 1.

**Table 1**

| Device identifier | Flow identifier | Traffic characteristic |
|---|---|---|
| Network device 1 | Source IP address: IP1; and destination IP address: IP2 | Start time: T11; and end time: T12 |
| | | Start time: T13; and end time: T14 |
| | | Start time: T15; and end time: T16 |
| | Source IP address: IP3; and destination IP address: IP4 | Start time: T21; and end time: T22 |
| | | Start time: T23; and end time: T24 |

Refer to Table 1. Assuming that IP1 and IP2 are IP addresses of terminal devices associated with the service, that is, the flow 1 is a service flow of a to-be-analyzed service, and T12, T14, and T16 are in a same statistical period, the network management device first calculates a transmission duration t11=T12-T11 of the packet group 11, a transmission duration t12=T14-T13 of the packet group 12, and a transmission duration t13=T16-T15 of the packet group 13, and then learns, through calculation, that a flow completion time of the flow 1 in the statistical period is an average value, a median value, a maximum value, or a quantile value of t11, t12, and t13.

Alternatively, in a first implementation of the first possible case, the traffic characteristic reported by the network device to the network management device may include a start time and an end time of each data transmission in the flow, or may include a start time and a transmission duration of each data transmission in the flow, or may include an end time and a transmission duration of each data transmission in the flow, or may include a start time, an end time, and a transmission duration of each data transmission in the flow.

In a second implementation of the first possible case, the measurement command sent by the network management device to the network device may indicate that a traffic characteristic whose statistics are collected includes a flow completion time, or the network device is preconfigured to collect statistics on flow completion times of a flow passing through the network device in the plurality of statistical periods. Correspondingly, the measurement result sent by the network device to the network management device includes a flow completion time of the one or more flows passing through the network device. For example, the plurality of network devices that receive the measurement command include a second network device. The second network device is any one of the plurality of network devices. A measurement result sent by the second network device to the network management device includes a second traffic characteristic of a second service flow. The second service flow is any one of the plurality of service flows of the service, and the second service flow includes a plurality of packet groups respectively used to complete a plurality of data transmissions. The second traffic characteristic includes a flow completion time of the second service flow in a second statistical period. The flow completion time of the second service flow in the second statistical period is obtained based on a transmission duration of one or more packet groups, among the plurality of packet groups, whose transmission end times are in the second statistical period. A transmission duration of each packet group is obtained based on a transmission end time and a transmission start time of the packet group. The second statistical period is any one of the plurality of statistical periods. For a manner in which the network device determines a flow completion time of a flow passing through the network device in a statistical period, refer to the manner in which the network management device determines the flow completion time of the service flow in the statistical period in the first implementation of the first possible case. Details are not described in this embodiment of this application again.

Optionally, the flow completion time of the second service flow in the second statistical period is a statistical value of transmission durations of all packet groups, among the plurality of packet groups of the second service flow, whose transmission end times are in the second statistical period. In this implementation, the network device collects statistics on a start time and an end time of each data transmission in a flow passing through the network device, and performs traffic analysis, to determine a flow completion time of the flow passing through the network device in the plurality of statistical periods; and the network management device summarizes and collects statistics on the traffic characteristics reported by the plurality of network devices, to obtain the flow completion times of the plurality of service flows of the service in the plurality of statistical periods. This implementation sets low requirements on processing performance of the network management device, and can improve traffic analysis efficiency of the network management device for the service.

Optionally, the network device may periodically collect statistics on the flow completion time of the one or more flows passing through the network device in the validity period of the measurement task, and report the statistics to the network management device. The plurality of statistical periods are a plurality of statistical periodicities. A measurement result sent by the network device to the network management device may include a flow completion time of a flow passing through the network device in one or more statistical periods. For example, a network device 2 learns, through calculation, that a flow completion time of a flow 3 passing through the network device 2 in a statistical period A1 is FCT1, and a flow completion time of the flow 3 passing through the network device 2 in a statistical period A2 is FCT2; and a flow completion time of a flow 4 passing through the network device 2 in the statistical period A1 is FCT3, and a flow completion time of the flow 4 passing through the network device 2 in the statistical period A2 is FCT4. A source IP address of the flow 3 is IP5, and a destination IP address of the flow 3 is IP6. A source IP address of the flow 4 is IP7, and a destination IP address of the flow 4 is IP8. In this case, a measurement result sent by the network device 2 to the network management device may be shown in Table 2.

**Table 2**

| Device identifier | Statistical period | Flow identifier | Traffic characteristic |
|---|---|---|---|
| Network device 2 | A1 | Source IP address: IP5; and destination IP address: IP6 | Flow completion time FCT1 |
| | | Source IP address: IP7; and destination IP address: IP8 | Flow completion time FCT3 |
| | A2 | Source IP address: IP5; and destination IP address: IP6 | Flow completion time FCT2 |
| | | Source IP address: IP7; and destination IP address: IP8 | Flow completion time FCT4 |

Optionally, each statistical period in Table 2 may be represented by using a start time and an end time of the statistical period. When the plurality of statistical periods are continuous in time sequence, each statistical period in Table 2 may also be represented by using a start time of the statistical period, where a start time of a next statistical period is an end time of a current statistical period; or each statistical period in Table 2 may be represented by using an end time of the statistical period, where a start time of the current statistical period is an end time of a previous statistical period.

Optionally, in a second implementation of the first possible case, the measurement result sent by the network device to the network management device may further include a start time and an end time of each data transmission in a flow passing through the network device.

Optionally, the synchronization measurement result may further include two or all of a start time, an end time, and a transmission duration of each data transmission in the plurality of service flows of the service.

Optionally, the synchronization measurement result may further include the earliest moment in flow start times of the plurality of service flows of the service and the latest moment in the flow end time of the plurality of service flows. A flow start time of a service flow is a start time of initial data transmission in the service flow, and a flow end time of a service flow is an end time of last data transmission in the service flow. For example, the plurality of service flows belong to a round of collective communication. The earliest moment in the flow start times of the plurality of service flows is a start time of the collective communication, and the latest moment in the flow end times of the plurality of service flows is an end time of the collective communication.

For example, the service is a round of collective communication. It is assumed that IP addresses of compute nodes participating in the collective communication include IP1 to IP4. The network management device determines, based on the measurement results reported by the plurality of network devices, that the collective communication includes eight service flows, and communication pairs involved in the eight service flows include: IP1→IP2 (where a source IP address of the service flow is IP1, and a destination IP address is IP2), IP2→IP1 (where a source IP address of the service flow is IP2, and a destination IP address is IP1), IP3→IP4 (where a source IP address of the service flow is IP3, and a destination IP address is IP4), IP4→IP3 (where a source IP address of the service flow is IP4, and a destination IP address is IP3), IP1→IP3 (where a source IP address of the service flow is IP1, and a destination IP address is IP3), IP3→IP1 (where a source IP address of the service flow is IP3, and a destination IP address is IP1), IP2→IP4 (where a source IP address of the service flow is IP2, and a destination IP address is IP4), and IP4→IP2 (where a source IP address of the service flow is IP4, and a destination IP address is IP2). For example, the synchronization measurement result includes flow completion times of the plurality of service flows of the collective communication in the plurality of statistical periods, a start time and an end time of the collective communication, and a start time, an end time, and a duration of each data transmission in the service flows of the collective communication. The synchronization measurement result may be shown in Table 3.

**Table 3**

| Synchronization measurement result | | | | | | |
|---|---|---|---|---|---|---|
| Start time and end time of collective communication | Statistical period | Communication pair | Flow completion time (FCT) | Start time of data transmission | End time of data transmission | Data transmission duration |
| | | IP1→IP2 | 5 ms | T11 | T12 | 5 ms (ms) |
| | | | | T13 | T14 | 5 ms |
| | | | | T15 | T16 | 5 ms |
| | | IP2→IP1 | 5 ms | T11 | T12 | 5 ms |
| | | | | T13 | T14 | 5 ms |
| | | | | T15 | T16 | 5 ms |
| | | IP3→IP4 | 5 ms | T11 | T12 | 5 ms |
| | | | | | | |
| Start time: Ts | A1 | | | T13 | T14 | 5 ms |
| End time: Te | | | | T15 | T16 | 5 ms |
| | | IP4→IP3 | 5 ms | T11 | T12 | 5 ms |
| | | | | T13 | T14 | 5 ms |
| | | | | T15 | T16 | 5 ms |
| | | IP1→IP3 | 10 ms | T21 | T22 | 10 ms |
| | | | | T23 | T24 | 10 ms |
| | | IP3→IP1 | 10 ms | T21 | T22 | 10 ms |
| | | | | T23 | T24 | 10 ms |
| | | IP2→IP4 | 10 ms | T21 | T22 | 10 ms |
| | | | | T23 | T24 | 10 ms |
| | | IP4→IP2 | 10 ms | T21 | T22 | 10 ms |
| | | | | T23 | T24 | 10 ms |
| | A2 | ... | ... | ... | ... | ... |
| | ... | ... | ... | ... | ... | ... |

Alternatively, the synchronization measurement result may be represented in a graph form. For example, FIG. 4 is a diagram of a synchronization measurement result according to an embodiment of this application. The horizontal axis indicates a time (t), and the vertical axis indicates a flow completion time (FCT). As shown in FIG. 4, in statistical periods A5 and A6, a flow completion time of the communication pair IP1→IP3 and a flow completion time of the communication pair IP3→IP1 are significantly longer. In this case, it may be considered that transmission quality of the service flow whose source IP address is IP1 and destination IP address is IP3 and transmission quality of the service flow whose source IP address is IP3 and destination IP address is IP1 deteriorate, and a root cause of deterioration of the transmission quality of the service flows is further located in the network, to improve stability and reliability of collective communication. **In a second possible case,** the traffic analysis task indicates to analyze throughput performance of the network device in the network for the plurality of service flows of the service. Correspondingly, the traffic analysis result includes a throughput performance measurement result, and the throughput performance measurement result includes throughputs, in a plurality of statistical periods, of the plurality of network devices in the network for the flows passing through the plurality of network devices.

In this embodiment of this application, flow throughput performance mainly reflects a traffic volume of a service flow received or sent by the network device. Throughputs of the network device for a plurality of service flows of a same service in the plurality of statistical periods are measured, and changes of the throughputs of the network device for the service flows with time are presented at a per-service granularity. A change of a throughput of the network device for a single service flow with time can reflect a change of transmission quality of the service flow, and changes of throughputs of the plurality of network devices for the plurality of service flows with time can reflect a change of overall service transmission quality. This helps operation and maintenance personnel analyze whether the overall service transmission quality deteriorates and a specific service flow that causes the deterioration of the service transmission quality. Collective communication is used as an example. Because collective communication is characterized by synchronous burst and communication efficiency depending on the slowest flow, statistics on changes of throughputs of the network device for all service flows in collective communication with time are collected, so that whether communication quality of collective communication is stable can be determined, and whether a throughput of a network device for a service flow is low, causing low collective communication efficiency can be determined. In this way, the communication quality of collective communication is analyzed at different granularities.

Optionally, for any one of the plurality of service flows of the service, if a difference between a throughput, of any network device through which the service flow passes, for the service flow in a seventh statistical period and a throughput of the network device for the service flow in an eighth statistical period is greater than a second threshold, the network management device determines that transmission quality of the service flow deteriorates. The eighth statistical period is later than the seventh statistical period in time sequence. In other words, if a throughput of the network device for a service flow becomes lower, it indicates that transmission quality of the service flow deteriorates. Correspondingly, the throughput performance measurement result may further include an indication for a service flow whose transmission quality deteriorates among the plurality of service flows. An indication for one service flow may include a device identifier of a sending device of the service flow (for example, a source IP address of the service flow) and a device identifier of a receiving device (for example, a destination IP address of the service flow). An indication for one service flow may further include a transmission path of the service flow in the network, a device identifier of a network device that collects statistics on a throughput for the service flow, and the like. In this way, a network location at which transmission quality of the service flow deteriorates can be checked on the transmission path of the service flow, to help improve analysis efficiency.

In a first implementation of the second possible case, the measurement command sent by the network management device to the plurality of network devices may indicate that a traffic characteristic whose statistics are collected includes a start time, an end time, and a traffic volume of each data transmission in a flow, or the network device is preconfigured to collect statistics on a start time, an end time, and a traffic volume of each data transmission in a flow passing through the network device. Correspondingly, the measurement result sent by the network device to the network management device includes a start time, an end time, and a traffic volume of each data transmission in one or more flows passing through the network device. For example, the plurality of network devices that receive the measurement command include a third network device. The third network device is any one of the plurality of network devices. A measurement result sent by the third network device to the network management device includes a third traffic characteristic of a third service flow. The third service flow is any one of the plurality of service flows, and the third service flow includes a plurality of packet groups respectively used to complete a plurality of data transmissions. The third traffic characteristic includes a transmission start time, a transmission end time, and a traffic volume of each of the plurality of packet groups. In this implementation, the network management device may determine a throughput of the third network device for the third service flow in a fifth statistical period based on a transmission duration and a traffic volume of one or more packet groups, among the plurality of packet groups, whose transmission end times are in the fifth statistical period. A Transmission duration of each packet group is obtained based on a transmission end time and a transmission start time of the packet group. The fifth statistical period is any one of the plurality of statistical periods. For a manner of determining a throughput of the third network device for the third service flow in another statistical period and a manner of determining throughputs of another network device for a service flow passing through the another network device in the plurality of statistical periods, refer to the manner of determining the throughput of the third network device for the third service flow in the fifth statistical period. Details are not described in this embodiment of this application again.

Optionally, a throughput of the network device for one service flow in a statistical period may be a ratio of a total traffic volume of the service flow transmitted by the network device in the statistical period to a flow completion time of the service flow in the statistical period.

In this implementation, the network device only needs to collect statistics on a start time, an end time, and a traffic volume of each data transmission in a flow passing through the network device, and the network management device performs traffic analysis on the service based on traffic characteristics reported by the plurality of network devices, to determine the throughputs of the plurality of network devices for the plurality of service flows of the service in the plurality of statistical periods. This implementation sets low requirements on processing performance of the network device.

Optionally, the network device may periodically send a measurement result to the network management device in the validity period of the measurement task. The measurement result includes a start time, an end time, and a traffic volume of a data transmission in the current period in one or more flows passing through the network device. For example, three data transmissions are completed in the current period in a flow 5 passing through a network device 3, and the three data transmissions correspond to three packet groups, namely, a packet group 51, a packet group 52, and a packet group 53. A transmission start time of the packet group 51 is T51, a transmission end time of the packet group 51 is T52, and a traffic volume of the packet group 51 is L1. A transmission start time of the packet group 52 is T53, a transmission end time of the packet group 52 is T54, and a traffic volume of the packet group 52 is L2. A transmission start time of the packet group 53 is T55, a transmission end time of the packet group 53 is T56, and a traffic volume of the packet group 53 is L3. Two data transmissions are completed in the current period in a flow 6 passing through the network device 3, and the two data transmissions correspond to two packet groups, namely, a packet group 61 and a packet group 62. A transmission start time of the packet group 61 is T61, a transmission end time of the packet group 61 is T62, and a traffic volume of the packet group 61 is L4. A transmission start time of the packet group 62 is T63, a transmission end time of the packet group 62 is T64, and a traffic volume of the packet group 62 is L5. A source IP address of the flow 5 is IP1, and a destination IP address of the flow 5 is IP2. A source IP address of the flow 6 is IP3, and a destination IP address of the flow 6 is IP4. In this case, a measurement result sent by the network device 3 to the network management device may be shown in Table 4.

**Table 4**

| Device identifier | Flow identifier | Traffic characteristic |
|---|---|---|
| | Source IP address: IP1; and destination IP address: IP2 | Start time: T51; end time: T52; and traffic volume: L1 |
| | | Start time: T53; end time: T54; and traffic volume: L2 |
| Network device 3 | | Start time: T55; end time: T56; and traffic volume: L3 |
| | Source IP address: IP3; and destination IP address: IP4 | Start time: T61; end time: T62; and traffic volume: L4 |
| | | Start time: T63; end time: T64; and traffic volume: L5 |

Refer to Table 4. It is assumed that IP1 and IP2 are IP addresses of terminal devices associated with the service, that is, the flow 5 is a service flow of a to-be-analyzed service, and T52, T54, and T56 are in a same statistical period. The network management device first calculates a transmission duration t51=T52-T51 of the packet group 51, a transmission duration t52=T54-T53 of the packet group 52, and a transmission duration t53=T56-T55 of the packet group 53, learns, through calculation, that a flow completion time t5 of the flow 5 in the statistical period is an average value, a median value, a maximum value, or a quantile value of t51, t52, and t53, and finally learns, through calculation, that a throughput of the network device 3 for the flow 5 in the statistical period is (L1+L2+L3)/t5. Alternatively, another calculation manner may be used. For example, a throughput TH52 corresponding to the moment T52 is L1/t51, a throughput TH54 corresponding to the moment T54 is L2/t52, a throughput TH56 corresponding to the moment T56 is L3/t53, and a throughput of the network device 3 for the flow 5 in the statistical period is an average value of TH52, TH54, and TH56.

Alternatively, in a first implementation of the second possible case, the traffic characteristic reported by the network device to the network management device may include a start time, an end time, and a traffic volume of each data transmission in the flow, or may include a start time, a transmission duration, and a traffic volume of each data transmission in the flow, or may include an end time, a transmission duration, and a traffic volume of each data transmission in the flow, or may include a start time, an end time, a transmission duration, and a traffic volume of each data transmission in the flow, or may include an end time and a throughput of each data transmission. In a second implementation of the second possible case, the measurement command sent by the network management device to the plurality of network devices may indicate that a traffic characteristic whose statistics are collected includes a throughput, or the network device is preconfigured to collect statistics on a throughput of a flow passing through the network device in the plurality of statistical periods. Correspondingly, the measurement result sent by the network device to the network management device includes throughputs for the one or more flows passing through the network device. For example, the plurality of network devices that receive the measurement command include a fourth network device. The fourth network device is any one of the plurality of network devices. A measurement result sent by the fourth network device to the network management device includes a fourth traffic characteristic of a fourth service flow. The fourth service flow is any one of the plurality of service flows, and the fourth service flow includes a plurality of packet groups respectively used to complete a plurality of data transmissions. The fourth traffic characteristic includes a throughput of the fourth network device for the fourth service flow in a sixth statistical period. The throughput for the fourth service flow in the sixth statistical period is obtained based on a transmission duration and a traffic volume of one or more packet groups, among the plurality of packet groups, whose transmission end times are in the sixth statistical period. A transmission duration of each packet group is obtained based on a transmission end time and a transmission start time of the packet group. The sixth statistical period is any one of the plurality of statistical periods. For a manner in which the network device determines a throughput of a flow passing through the network device in a statistical period, refer to the manner in which the network management device determines the throughput of the network device for the service flow in the statistical period in the first implementation of the second possible case. Details are not described in this embodiment of this application again.

In this implementation, the network device collects statistics on a start time, an end time, and a traffic volume of each data transmission in a flow passing through the network device, and performs traffic analysis, to determine throughputs for the flow passing through the network device in the plurality of statistical periods; and the network management device summarizes and collects statistics on the traffic characteristics reported by the plurality of network devices, to obtain the throughputs of the plurality of network devices for the plurality of service flows of the service in the plurality of statistical periods. This implementation sets low requirements on processing performance of the network management device, and can improve traffic analysis efficiency of the network management device for the service.

Optionally, the network device may periodically collect statistics on the throughputs of the one or more flows passing through the network device in the validity period of the measurement task, and report the statistics to the network management device. The plurality of statistical periods are a plurality of statistical periodicities. A measurement result sent by the network device to the network management device may include a throughput of a flow passing through the network device in one or more statistical periods. For example, a network device 4 learns, through calculation, that a throughput of the network device 4 for a flow 7 in a statistical period A1 is F1, and a throughput of the network device 4 for the flow 7 in the statistical period A2 is F2; and a throughput of the network device 4 for a flow 8 in a statistical period A1 is F3, and a throughput of the network device 4 for the flow 8 in the statistical period A2 is F4. A source IP address of the flow 7 is IP5, and a destination IP address of the flow 7 is IP6. A source IP address of the flow 8 is IP7, and a destination IP address of the flow 8 is IP8. In this case, a measurement result sent by the network device 4 to the network management device may be shown in Table 5.

**Table 5**

| Device identifier | Statistical period | Flow identifier | Traffic characteristic |
|---|---|---|---|
| | A1 | Source IP address: IP5; and destination IP address: IP6 | Throughput F1 |
| Network device 4 | | Source IP address: IP7; and destination IP address: IP8 | Throughput F2 |
| | A2 | Source IP address: IP5; and destination IP address: IP6 | Throughput F3 |
| | | Source IP address: IP7; and destination IP address: IP8 | Throughput F4 |

Optionally, each statistical period in Table 5 may be represented by using a start time and an end time of the statistical period. When the plurality of statistical periods are continuous in time sequence, each statistical period in Table 5 may also be represented by using a start time of the statistical period, where a start time of a next statistical period is an end time of a current statistical period; or each statistical period in Table 5 may be represented by using an end time of the statistical period, where an end time of the current statistical period is a start time of a next statistical period.

Optionally, in the second possible case, the measurement command may further include an ingress indication. In this way, the network device collects, only in an inbound direction, statistics on a start time, an end time, and a traffic volume of each data transmission in a received flow. Therefore, the throughput of the network device for the service flow actually reflects a traffic volume of the service flow received by the network device. Certainly, this embodiment of this application does not exclude an implementation in which the network device collects, in an outbound direction, statistics on a start time, an end time, and a traffic volume of each data transmission in a sent flow, to calculate a throughput.

Optionally, the throughput performance measurement result further includes a traffic direction and/or an interface identifier of the network device. The traffic direction indicates whether the service flow whose statistics are collected is a service flow received by the network device or a service flow sent by the network device. The interface identifier indicates an interface through which the service flow passes on the network device.

For example, the service is a round of collective communication. It is assumed that IP addresses of compute nodes participating in the collective communication include IP1 to IP4. The network management device determines, based on the measurement results reported by the plurality of network devices, that the collective communication includes eight service flows, and communication pairs involved in the eight service flows include: IP1→IP2 (where a source IP address of the service flow is IP1, and a destination IP address is IP2), IP2→IP1 (where a source IP address of the service flow is IP2, and a destination IP address is IP1), IP3→IP4 (where a source IP address of the service flow is IP3, and a destination IP address is IP4), IP4→IP3 (where a source IP address of the service flow is IP4, and a destination IP address is IP3), IP1→IP3 (where a source IP address of the service flow is IP1, and a destination IP address is IP3), IP3→IP1 (where a source IP address of the service flow is IP3, and a destination IP address is IP1), IP2→IP4 (where a source IP address of the service flow is IP2, and a destination IP address is IP4), and IP4→IP2 (where a source IP address of the service flow is IP4, and a destination IP address is IP2). For example, the throughput performance measurement result includes throughputs of the plurality of network devices in the network for the service flows passing through the plurality of network devices in the plurality of statistical periods, an interface identifier of an interface through which the service flow passes on the network device, and a traffic direction. The throughput performance measurement result may be shown in Table 6.

**Table 6**

| Throughput performance measurement result | | | | | |
|---|---|---|---|---|---|
| Statistical period | Device identifier | Interface identifier | Traffic direction | Communication pair | Throughput |
| A1 | Network device 1 | Interface 11 | Inbound | IP1→IP2 | 80 Gbps (gigabit per second) |
| | | Interface 12 | | IP3→IP4 | 100 Gbps |
| | Network device 2 | Interface 21 | | IP2→IP1 | 80 Gbps |
| | | Interface 22 | | IP4→IP3 | 100 Gbps |
| | Network device 3 | Interface 31 | | IP1→IP3 | 80 Gbps |
| | | Interface 32 | | IP2→IP4 | 100 Gbps |
| | Network device 4 | Interface 41 | | IP3→IP1 | 80 Gbps |
| | | Interface 42 | | IP4→IP2 | 100 Gbps |
| A2 | Network device 1 | Interface 11 | Inbound | IP1→IP2 | 60 Gbps |
| | | Interface 12 | | IP3→IP4 | 100 Gbps |
| | Networkdevice 2 | Interface 21 | | IP2→IP1 | 80 Gbps |
| | | Interface 22 | | IP4→IP3 | 100 Gbps |
| | Network device 3 | Interface 31 | | IP1→IP3 | 40 Gbps |
| | | Interface 32 | | IP2→IP4 | 100 Gbps |
| | Network device 4 | Interface 41 | | IP3→IP1 | 80 Gbps |
| | | Interface 42 | | IP4→IP2 | 100 Gbps |
| ... | ... | ... | ... | ... | ... |

It can be learned from Table 6 that the network device 1 is configured to collect statistics on traffic characteristics of a service flow whose source IP address is IP1 and destination IP address is IP2 and a service flow whose source IP address is IP3 and destination IP address is IP4, where an inbound interface of the service flow whose source IP address is IP1 and destination IP address is IP2 on the network device 1 is the interface 11, and an inbound interface of the service flow whose source IP address is IP3 and destination IP address is IP4 on the network device 1 is the interface 12. The network device 2 is configured to collect statistics on traffic characteristics of a service flow whose source IP address is IP2 and destination IP address is IP1 and a service flow whose source IP address is IP4 and destination IP address is IP3, where an inbound interface of the service flow whose source IP address is IP2 and destination IP address is IP1 on the network device 2 is the interface 21, and an inbound interface of the service flow whose source IP address is IP4 and destination IP address is IP3 on the network device 2 is the interface 22. The network device 3 is configured to collect statistics on traffic characteristics of a service flow whose source IP address is IP1 and destination IP address is IP3 and a service flow whose source IP address is IP2 and destination IP address is IP4, where an inbound interface of the service flow whose source IP address is IP1 and destination IP address is IP3 on the network device 3 is the interface 31, and an inbound interface of the service flow whose source IP address is IP2 and destination IP address is IP4 on the network device 3 is the interface 32. The network device 4 is configured to collect statistics on traffic characteristics of a service flow whose source IP address is IP3 and destination IP address is IP1 and a service flow whose source IP address is IP4 and destination IP address is IP2, where an inbound interface of the service flow whose source IP address is IP3 and destination IP address is IP1 on the network device 4 is the interface 41, and an inbound interface of the service flow whose source IP address is IP4 and destination IP address is IP2 on the network device 4 is the interface 42.

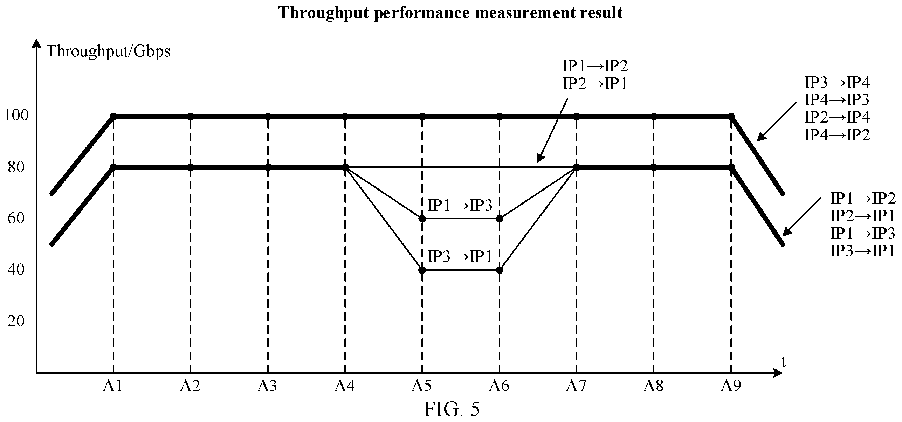

Alternatively, the throughput performance measurement result may be represented in a graph form. For example, FIG. 5 is a diagram of a throughput performance measurement result according to an embodiment of this application. The horizontal axis indicates time (t), and the vertical axis indicates a throughput. As shown in FIG. 5, in statistical periods A5 and A6, a throughput for the communication pair IP1→IP3 and a throughput for the communication pair IP3→IP1 significantly decreases. In this case, it may be considered that transmission quality of the service flow whose source IP address is IP1 and destination IP address is IP3 and transmission quality of the service flow whose source IP address is IP3 and destination IP address is IP1 deteriorate, and a root cause of deterioration of the transmission quality of the service flows is further located in the network, to improve stability and reliability of collective communication.

Optionally, in the first possible case and the second possible case, an implementation of step 302 may be as follows: The network management device respectively sends the measurement commands to a plurality of access network devices in the network, where each access network device is configured to enable the one or more terminal devices associated with the service to access the network. For example, with reference to the application scenario shown in FIG. 2, the terminal devices associated with the service include the terminal device 202A, the terminal device 202B, and the terminal device 202C. That is, the measurement task information includes a device identifier of the terminal device 202A, a device identifier of the terminal device 202B, and a device identifier of the terminal device 202C. In this case, the network management device may respectively send the measurement commands to only the network device 203C, the network device 203D, and the network device 203E.

In this embodiment of this application, a service flow sent or received by the terminal device associated with the service inevitably passes through an access network device. When a service flow is transmitted in the network, flow completion times and throughputs for the service flow on different network devices are basically the same. Therefore, when a traffic characteristic whose statistics are to be collected includes a flow completion time and/or a throughput, only statistics on a traffic characteristic of a flow passing through the access network device need to be collected. In this way, on a premise that statistics on traffic characteristics of all service flows of the service are collected, a quantity of network devices participating in service traffic analysis can be reduced, to save communication resources between the network device and the network management device and respective processing resources of the network device and the network management device. **In a third possible case,** the traffic analysis task indicates to analyze load balance of the plurality of network devices in the network for the service. Correspondingly, the traffic analysis result includes a load balance measurement result, where the load balance measurement result includes load balance of the plurality of network devices in the network for the service. In this possible case, the measurement command sent by the network management device to the plurality of network devices may indicate that a traffic characteristic whose statistics are collected includes a traffic volume, or the network device is preconfigured to collect statistics on a traffic volume of a flow passing through the network device. For each network device, the network management device may determine, an accumulated traffic volume of the network device for the service based on traffic volumes of all service flows in the measurement result sent by the network device. The accumulated traffic volume of the network device for the service is a sum of traffic of all service flows of the service passing through the network device. The network management device determines load balance of the plurality of network devices for the service based on accumulated traffic volumes of the plurality of network devices for the service. The load balance is negatively correlated with a difference between the accumulated traffic volumes of the plurality of network devices for the service. In other words, a smaller difference between the accumulated traffic volumes of the plurality of network devices for the service indicates higher load balance.

Optionally, there may be a plurality of measurement standards for the load balance. For example, in an ideal traffic load status, accumulated traffic volumes of the plurality of access network devices for the service are the same. In this case, the load balance may be determined based on the accumulated traffic volumes of the plurality of access network devices for the service. For another example, in an ideal traffic load status, all the network devices involved in the service have a same accumulated traffic volume for the service, the load balance may be determined based on the accumulated traffic volumes of all the network devices for the service.

Optionally, the network device may periodically send a measurement result to the network management device in the validity period of the measurement task. The measurement result includes a traffic volume of the one or more flows passing through the network device.

In this embodiment of this application, the load balance mainly reflects a difference between traffic volumes of a same service transmitted by different network devices. Higher load balance indicates that traffic distribution on the network device is more even when the plurality of service flows of the service are transmitted in the network, and a probability that congestion occurs on the network device is lower. The network management device analyzes load balance of different network devices on network paths through which the service flow passes, to help an operation and maintenance side analyze and adjust a transmission path of the service flow in the service, so as to improve load balance of the plurality of network devices for the service.

Optionally, the load balance measurement result may further include an accumulated traffic volume of each of the plurality of network devices for the service. For example, the load balance measurement result may be shown in Table 7.

**Table 7**

| Device identifier | Accumulated traffic volume | Load balance |
|---|---|---|
| Network device 1 | 100G | |
| Network device 2 | 100G | Excellent |
| Network device 3 | 120G | |
| ... | ... | |

Optionally, in the third possible case, an implementation of step 302 may be as follows: The network management device sends the measurement command only to a plurality of network devices on network paths of a plurality of service flows of the service in the network. In this way, a quantity of network devices participating in service traffic analysis can be reduced, to save communication resources between the network device and the network management device and respective processing resources of the network device and the network management device.

In the foregoing three possible cases provided in this embodiment of this application, that the traffic analysis task indicates to analyze a single task is used as an example. In actual application, the traffic analysis task may alternatively indicate to analyze two or more tasks. Correspondingly, the traffic analysis result may include one or more of a synchronization measurement result, a throughput performance measurement result, or a load balance measurement result.

In addition, in this embodiment of this application, the network management device may further collect statistics on network paths of a plurality of service flows of a same service. For example, the network management device may respectively send the measurement commands to all the network devices in the network, to indicate a network device that receives the measurement command to report a flow identifier of one or more flows passing through the network device. The flow identifier may include a source IP address, a destination IP address, and a QP number. The network management device may identify, based on the flow identifier, a same flow passing through different network devices, and determine, with reference to an IP address associated with a service in the measurement task information, whether the flow is a service flow of the service. In addition, in a scenario in which the service is collective communication, a synchronization measurement result of the flow may be further used to determine which flows belong to same collective communication, so as to determine a plurality of network paths of different service flows of a same service in the network.

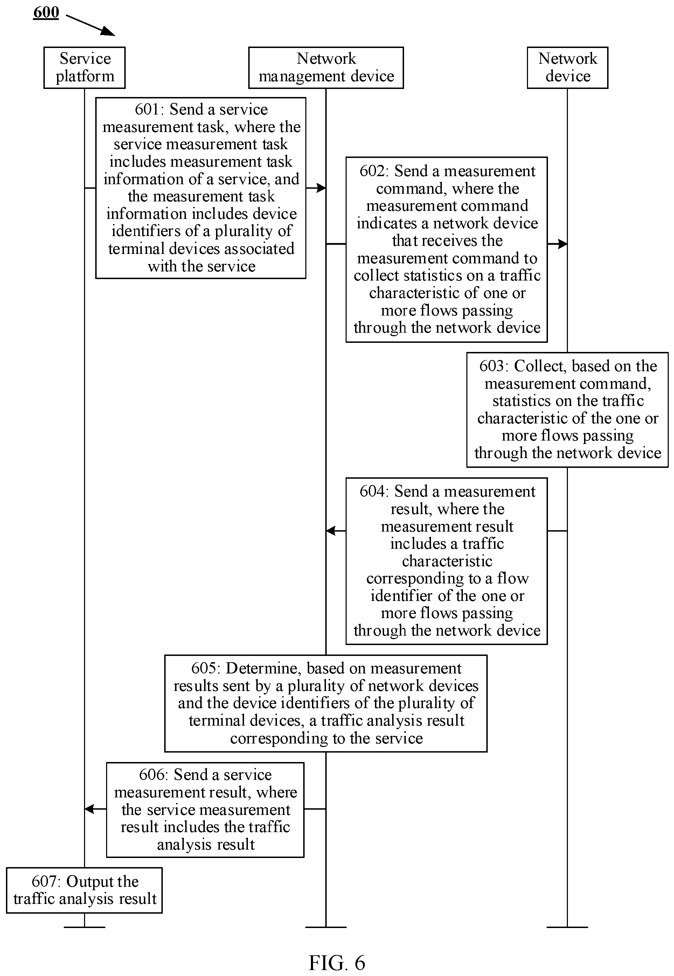

Optionally, the network management device may perform service traffic analysis on a service under triggering of a service platform. For example, FIG. 6 is a schematic flowchart of another service traffic analysis method according to an embodiment of this application. As shown in FIG. 6, the method 600 includes but is not limited to the following step 601 to step 607.

Step 601: A service platform sends a service measurement task to a network management device, where the service measurement task includes measurement task information of a service, and the measurement task information includes device identifiers of a plurality of terminal devices associated with the service.

The service includes a plurality of service flows, and the plurality of terminal devices include sending devices and receiving devices of the plurality of service flows. For explanations of the measurement task information, refer to step 301. Details are not described in this embodiment of this application again.

Optionally, for example, the service is a distributed training task. The measurement task information may include a task identifier, information about a compute resource occupied by the task, collective communication domain information, and a traffic analysis task. The task identifier is a unique identifier used to distinguish the current distributed training task, for example, a universally unique identifier (universally unique identifier, UUID). The information about the compute resource occupied by the task includes an IP address of a compute node involved in the current task, and the like. The collective communication domain information includes a collective communication domain identifier of one or more times of collective communication involved in the current task and an IP address of a compute node that participates in the collective communication. The collective communication domain information may further include a collective communication mode and/or a collective communication algorithm.

Optionally, the collective communication mode includes but is not limited to AllReduce (AllReduce), broadcast (broadcast), AllGather (AllGather), ReduceScatter (ReduceScatter), all-to-all (all-to-all), and peer to peer (peer to peer, p2p). Different collective communication modes can be used to complete data synchronization tasks with different purposes in the distributed task. The collective communication algorithm includes a ring (ring) algorithm, a halving and doubling (halving and doubling, HD) algorithm, a tree (tree) algorithm, and the like.

Further, after receiving the service measurement task sent by the service platform, the network management device may perform the following step 602.

Step 602: The network management device sends measurement commands to a plurality of network devices in the network, where the measurement command indicates a network device that receives the measurement command to collect statistics on a traffic characteristic of one or more flows passing through the network device.

Optionally, the measurement command may indicate the traffic characteristic whose statistics needs to be collected. Optionally, the measurement command may further include a measurement indication, and the measurement indication includes one or more of the following: a source IP address set, a destination IP address set, an ingress indication, an egress indication, or an interface indication. The measurement command may further include validity time of the measurement task. For explanations of the measurement command, refer to step 302. Details are not described in this embodiment of this application again.

For implementation of step 602, refer to the implementation of step 302. Details are not described in this embodiment of this application again.

Further, after receiving the measurement command sent by the network management device, the network device in the network may perform the following step 603 and step 604.

Step 603: The network device collects, based on the measurement command, statistics on the traffic characteristic of one or more flows passing through the network device.

With reference to the first implementation of the first possible case, the traffic characteristic indicated by the measurement command indicates for statistical collection includes a start time and an end time of each data transmission. Correspondingly, a measurement result includes a first traffic characteristic of a first flow. The first flow is any flow in the one or more flows passing through the network device, the first flow includes a plurality of packet groups respectively used to complete a plurality of data transmissions, and the first traffic characteristic includes a transmission start time and a transmission end time of each of the plurality of packet groups.

With reference to the second implementation of the first possible case, the traffic characteristic indicated by the measurement command indicates for statistical collection includes a flow completion time. Correspondingly, a measurement result includes a second traffic characteristic of a second flow. The second flow is any flow in the one or more flows passing through the network device, the second flow includes a plurality of packet groups respectively used to complete a plurality of data transmissions, and the second traffic characteristic includes a flow completion time of the second flow in one or more statistical periods. A flow completion time of the second flow in each statistical period is obtained based on a transmission duration of one or more packet groups, among the plurality of packet groups, whose transmission end times are in the statistical period. A transmission duration of each packet group is obtained based on a transmission end time and a transmission start time of the packet group.

With reference to the first implementation of the second possible case, the traffic characteristic indicated by the measurement command for statistical collection includes a start time, an end time, and a traffic volume of each data transmission. Correspondingly, a measurement result includes a third traffic characteristic of a third flow. The third flow is any flow in the one or more flows passing through the network device, the third flow includes a plurality of packet groups respectively used to complete a plurality of data transmissions, and the third traffic characteristic includes a transmission start time, a transmission end time, and a traffic volume of each of the plurality of packet groups.

With reference to the second implementation of the second possible case, the traffic characteristic indicated by the measurement command for statistical collection includes a throughput. Correspondingly, a measurement result includes a fourth traffic characteristic of a fourth flow. The fourth flow is any flow in the one or more flows passing through the network device, the fourth flow includes a plurality of packet groups respectively used to complete a plurality of data transmissions, and the fourth traffic characteristic includes a throughput of the network device for the fourth flow in one or more statistical periods. A throughput for the fourth flow in each statistical period is obtained based on a transmission duration and a traffic volume of one or more packet groups, among the plurality of packet groups, whose transmission end times are in the statistical period. A transmission duration of each packet group is obtained based on a transmission end time and a transmission start time of the packet group.

With reference to the third possible case, the traffic characteristic indicated by the measurement command for statistical collection includes a traffic volume. Correspondingly, the measurement result includes a traffic volume of the one or more flows passing through the network device.

Step 604: The network device sends a measurement result to the network management device, where the measurement result includes a traffic characteristic corresponding to a flow identifier of the one or more flows passing through the network device.

A flow identifier of each flow includes a device identifier of a sending device of the flow and a device identifier of a receiving device of the flow. For explanations of the measurement result, refer to the related content in the foregoing method 300. Details are not described in this embodiment of this application again.

Step 605: The network management device determines, based on the measurement results sent by the plurality of network devices and the device identifiers of the plurality of terminal devices, a traffic analysis result corresponding to the service.

Optionally, the traffic analysis result includes one or more of a synchronization measurement result, a throughput performance measurement result, or a load balance measurement result. For explanations of the traffic analysis result, refer to the related content in the foregoing method 300. For implementation of step 605, refer to the implementation of step 304. Details are not described in this embodiment of this application again.

Step 606: The network management device sends a service measurement result to the service platform, where the service measurement result includes the traffic analysis result.

Further, after receiving the service measurement result sent by the network management device, the service platform may perform the following step 607.

Step 607: The service platform outputs the traffic analysis result.

Optionally, the service platform may display the traffic analysis result, or the service platform may send the traffic analysis result to a display device for display, so that operation and maintenance personnel view the traffic analysis result corresponding to the service, to implement quality monitoring and management of the service.

In this embodiment of this application, a traffic characteristic that the network device collects statistics on is combined with the service, to implement network measurement at a per-service granularity. This helps monitor and analyze service quality. For example, the service is a distributed training task or collective communication. A traffic characteristic of each service flow in the collective communication is analyzed based on a characteristic of the collective communication, flow synchronization, throughput performance, and load balance of the collective communication are measured, and a measurement result is reported to the service platform, thereby coordinating with a compute task, to assist in analyzing whether slowness or a failure of distributed training is caused by a network side or a computing side.

A sequence of steps of the service traffic analysis method provided in embodiments of this application may be appropriately adjusted, or the steps may be correspondingly added or deleted based on a situation. Any method variation readily figured out by a person skilled in the art within the technical scope disclosed in this application shall fall within the protection scope of this application.

The following describes a virtual apparatus in embodiments of this application by using an example.

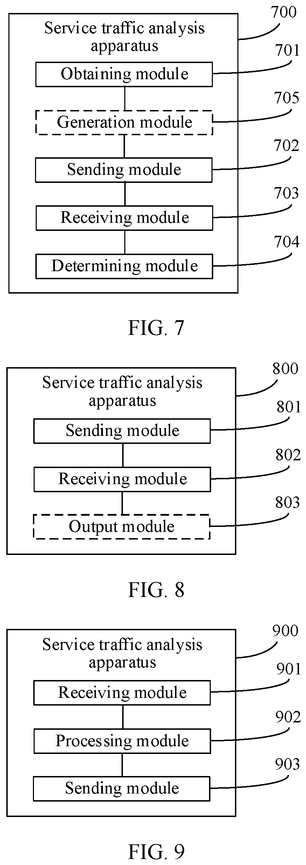

For example, FIG. 7 is a diagram of a structure of a service traffic analysis apparatus according to an embodiment of this application. The apparatus may be used in a network management device. As shown in FIG. 7, the apparatus 700 includes but is not limited to an obtaining module 701, a sending module 702, a receiving module 703, and a determining module 704. Optionally, the apparatus 700 further includes a generation module 705.

The obtaining module 701 is configured to obtain measurement task information of a service, where the measurement task information includes device identifiers of a plurality of terminal devices associated with the service, the service includes a plurality of service flows, and the plurality of terminal devices include sending devices and receiving devices of the plurality of service flows. The sending module 702 is configured to send measurement commands to a plurality of network devices in a network, where the measurement command indicates a network device that receives the measurement command to collect statistics on a traffic characteristic of one or more flows passing through the network device. The receiving module 703 is configured to receive measurement results sent by the plurality of network devices, where a measurement result sent by each network device includes a traffic characteristic corresponding to a flow identifier of one or more flows passing through the network device, and a flow identifier of each flow includes a device identifier of a sending device of the flow and a device identifier of a receiving device of the flow. The determining module 704 is configured to determine, based on the measurement results sent by the plurality of network devices and the device identifiers of the plurality of terminal devices, a traffic analysis result corresponding to the service.

Optionally, the service is a collective communication or distributed training task.

Optionally, the determining module 704 is configured to: for the measurement result sent by each network device, determine, based on a flow identifier in the measurement result and the device identifiers of the plurality of terminal devices, a service flow that belongs to the service from among the one or more flows passing through the network device; and determine the traffic analysis result based on traffic characteristics of the plurality of service flows in the measurement results sent by the plurality of network devices.

In a first implementation, the plurality of network devices include a first network device, a measurement result sent by the first network device includes a first traffic characteristic of a first service flow, the first service flow is any one of the plurality of service flows, and the first service flow includes a plurality of packet groups respectively used to complete a plurality of data transmissions. The first traffic characteristic includes a transmission start time and a transmission end time of each of the plurality of packet groups. The determining module 704 is configured to determine a flow completion time of the first service flow in a first statistical period based on a transmission duration of one or more packet groups, among the plurality of packet groups, whose transmission end times are in the first statistical period, where a transmission duration of each packet group is obtained based on a transmission end time and a transmission start time of the packet group. The traffic analysis result includes flow completion times of the plurality of service flows in a plurality of statistical periods, and the first statistical period is any one of the plurality of statistical periods.

In a second implementation, the plurality of network devices include a second network device, a measurement result sent by the second network device includes a second traffic characteristic of a second service flow, the second service flow is any one of the plurality of service flows, and the second service flow includes a plurality of packet groups respectively used to complete a plurality of data transmissions. The second traffic characteristic includes a flow completion time of the second service flow in a second statistical period, the flow completion time of the second service flow in the second statistical period is obtained based on a transmission duration of one or more packet groups, among the plurality of packet groups, whose transmission end times are in the second statistical period, and a transmission duration of each packet group is obtained based on a transmission end time and a transmission start time of the packet group. The traffic analysis result includes flow completion times of the plurality of service flows in a plurality of statistical periods, and the second statistical period is any one of the plurality of statistical periods.

Optionally, a flow completion time of one service flow in a statistical period is a statistical value of transmission durations of all packet groups, in the service flow, whose transmission end times are in the statistical period.

Optionally, with reference to the first implementation or the second implementation, the determining module 704 is further configured to: for any one of the plurality of service flows, if a difference between a flow completion time of the service flow in a third statistical period and a flow completion time of the service flow in a fourth statistical period is greater than a first threshold, determine that transmission quality of the service flow deteriorates, where the third statistical period is later than the fourth statistical period in time sequence. The traffic analysis result further includes an indication for a service flow whose transmission quality deteriorates among the plurality of service flows.

In a third implementation, the plurality of network devices include a third network device, a measurement result sent by the third network device includes a third traffic characteristic of a third service flow, the third service flow is any one of the plurality of service flows, and the third service flow includes a plurality of packet groups respectively used to complete a plurality of data transmissions. The third traffic characteristic includes a transmission start time, a transmission end time, and a traffic volume of each of the plurality of packet groups. The determining module 704 is configured to determine a throughput of the third network device for the third service flow in a fifth statistical period based on a transmission duration and a traffic volume of one or more packet groups, among the plurality of packet groups, whose transmission end times are in the fifth statistical period, where the transmission duration of each packet group is obtained based on a transmission end time and a transmission start time of the packet group. The traffic analysis result includes throughputs of the plurality of network devices for service flows passing through the plurality of network devices in a plurality of statistical periods, and the fifth statistical period is any one of the plurality of statistical periods.

In a fourth implementation, the plurality of network devices include a fourth network device, a measurement result sent by the fourth network device includes a fourth traffic characteristic of a fourth service flow, the fourth service flow is any one of the plurality of service flows, and the fourth service flow includes a plurality of packet groups respectively used to complete a plurality of data transmissions. The fourth traffic characteristic includes a throughput of the fourth network device for the fourth service flow in a sixth statistical period, the throughput for the fourth service flow in the sixth statistical period is obtained based on a transmission duration and a traffic volume of one or more packet groups, among the plurality of packet groups, whose transmission end times are in the sixth statistical period, and a transmission duration of each packet group is obtained based on a transmission end time and a transmission start time of the packet group. The traffic analysis result includes throughputs of the plurality of network devices for service flows passing through the plurality of network devices in a plurality of statistical periods, and the sixth statistical period is any one of the plurality of statistical periods.

Optionally, with reference to the third implementation or the fourth implementation, the determining module 704 is further configured to: for any one of the plurality of service flows, if a difference between a throughput, of any network device through which the service flow passes, for the service flow in a seventh statistical period and a throughput of the network device for the service flow in an eighth statistical period is greater than a second threshold, determine that transmission quality of the service flow deteriorates, where the eighth statistical period is later than the seventh statistical period in time sequence. The traffic analysis result further includes an indication for a service flow whose transmission quality deteriorates among the plurality of service flows.

Optionally, with reference to any one of the first implementation to the fourth implementation, the sending module is configured to respectively send the measurement commands to a plurality of access network devices in the network, where each access network device is configured to enable one or more of the plurality of terminal devices to access the network.

In a fifth implementation, the measurement result sent by each network device includes a traffic volume of the one or more flows passing through the network device, and the determining module 704 is configured to: for each network device, determine an accumulated traffic volume of the network device for the service based on traffic volumes of all service flows in the measurement result sent by the network device; and determine load balance of the plurality of network devices for the service based on accumulated traffic volumes of the plurality of network devices for the service, where the load balance is negatively correlated with a difference between the accumulated traffic volumes of the plurality of network devices for the service. The traffic analysis result includes the load balance of the plurality of network devices for the service.

Optionally, with reference to the fifth implementation, the sending module 702 is configured to respectively send the measurement commands to all network devices on network paths of the plurality of service flows in the network.

Optionally, the measurement command further includes a measurement indication, and the measurement indication includes one or more of the following: a source IP address set, where the source IP address set includes an IP address of each of one or more of the plurality of terminal devices, and the source IP address set indicates a network device that receives the measurement command to collect statistics on a traffic characteristic of a flow, passing through the network device, whose source IP address belongs to the source IP address set; a destination IP address set, where the destination IP address set includes an IP address of each of one or more of the plurality of terminal devices, and the destination IP address set indicates a network device that receives the measurement command to collect statistics on a traffic characteristic of a flow, passing through the network device, whose destination IP address belongs to the destination IP address set; an ingress indication, where the ingress indication indicates a network device that receives the measurement command to collect statistics on a traffic characteristic of one or more flows received by the network device; an egress indication, where the egress indication indicates a network device that receives the measurement command to collect statistics on a traffic characteristic of one or more flows sent by the network device; and an interface indication, where the interface indication indicates a network device that receives the measurement command to collect statistics on a traffic characteristic of a flow passing through one or more specified interfaces of the network device, the measurement result sent by the network device further includes an interface identifier, and the interface identifier indicates an interface through which the flow passes on the network device.

Optionally, the measurement task information further includes a traffic analysis task, and the traffic analysis task indicates a traffic analysis type. The generation module 705 is configured to generate the measurement command based on the traffic analysis task, where a type of a traffic characteristic indicated by the measurement command for statistical collection matches the traffic analysis type indicated by the traffic analysis task. Correspondingly, the determining module is configured to determine, based on the measurement results sent by the plurality of network devices and the device identifiers of the plurality of terminal devices, the traffic analysis result of the service for the traffic analysis type indicated by the traffic analysis task.

Optionally, the obtaining module 701 is configured to receive a service measurement task sent by a service platform, where the service measurement task includes the measurement task information. Optionally, the sending module 702 is further configured to send a service measurement result to the service platform, where the service measurement result includes the traffic analysis result. Optionally, the plurality of service flows are RDMA flows.

For example, FIG. 8 is a diagram of a structure of another service traffic analysis apparatus according to an embodiment of this application. The apparatus may be used in a service platform. As shown in FIG. 8, the apparatus 800 includes but is not limited to a sending module 801 and a receiving module 802. Optionally, the apparatus 800 further includes an output module 803.

The sending module 801 is configured to send a service measurement task to a network management device, where the service measurement task includes measurement task information of a service, the measurement task information includes device identifiers of a plurality of terminal devices associated with the service, the service includes a plurality of service flows, and the plurality of terminal devices include sending devices and receiving devices of the plurality of service flows. The receiving module 802 is configured to receive a service measurement result sent by the network management device, where the service measurement result includes a traffic analysis result corresponding to the service.

Optionally, the service is a collective communication or distributed training task.

Optionally, the output module 803 is configured to output the traffic analysis result.

For example, FIG. 9 is a diagram of a structure of another service traffic analysis apparatus according to an embodiment of this application. The apparatus may be used in a network device. As shown in FIG. 9, the apparatus 900 includes but is not limited to a receiving module 901, a processing module 902, and a sending module 903.

The receiving module 901 is configured to receive a measurement command sent by a network management device, where the measurement command indicates the network device to collect statistics on a traffic characteristic of one or more flows passing through the network device. The processing module 902 is configured to collect, based on the measurement command, statistics on the traffic characteristic of the one or more flows passing through the network device. The sending module 903 is configured to send a measurement result to the network management device, where the measurement result includes a traffic characteristic corresponding to a flow identifier of the one or more flows passing through the network device, and a flow identifier of each flow includes a device identifier of a sending device of the flow and a device identifier of a receiving device of the flow.

Optionally, the measurement command further includes a measurement indication, and the measurement indication includes one or more of the following: a source IP address set, where the source IP address set includes one or more IP addresses, and the source IP address set indicates the network device to collect statistics on a traffic characteristic of a flow, passing through the network device, whose source IP address belongs to the source IP address set; a destination IP address set, where the destination IP address set includes one or more IP addresses, and the destination IP address set indicates the network device to collect statistics on a traffic characteristic of a flow, passing through the network device, whose destination IP address belongs to the destination IP address set; an ingress indication, where the ingress indication indicates the network device to collect statistics on a traffic characteristic of one or more flows received by the network device; an egress indication, where the egress indication indicates the network device to collect statistics on a traffic characteristic of one or more flows sent by the network device; and an interface indication, where the interface indication indicates the network device to collect statistics on a traffic characteristic of a flow passing through one or more specified interfaces of the network device, the measurement result sent by the network device further includes an interface identifier, and the interface identifier indicates an interface through which the flow passes on the network device.

Optionally, a measurement result includes a first traffic characteristic of a first flow. The first flow is any flow in the one or more flows, the first flow includes a plurality of packet groups respectively used to complete a plurality of data transmissions, and the first traffic characteristic includes a transmission start time and a transmission end time of each of the plurality of packet groups. Optionally, a measurement result includes a second traffic characteristic of a second flow. The second flow is any flow in the one or more flows passing through the network device, the second flow includes a plurality of packet groups respectively used to complete a plurality of data transmissions, and the second traffic characteristic includes a flow completion time of the second flow in one or more statistical periods. A flow completion time of the second flow in each statistical period is obtained based on a transmission duration of one or more packet groups, among the plurality of packet groups, whose transmission end times are in the statistical period. A transmission duration of each packet group is obtained based on a transmission end time and a transmission start time of the packet group.

Optionally, a measurement result includes a third traffic characteristic of a third flow. The third flow is any flow in the one or more flows, the third flow includes a plurality of packet groups respectively used to complete a plurality of data transmissions, and the third traffic characteristic includes a transmission start time, a transmission end time, and a traffic volume of each of the plurality of packet groups.

Optionally, a measurement result includes a fourth traffic characteristic of a fourth flow. The fourth flow is any flow in the one or more flows, the fourth flow includes a plurality of packet groups respectively used to complete a plurality of data transmissions, and the fourth traffic characteristic includes a throughput of the network device for the fourth flow in one or more statistical periods. A throughput for the fourth flow in each statistical period is obtained based on a transmission duration and a traffic volume of one or more packet groups, among the plurality of packet groups, whose transmission end times are in the statistical period. A transmission duration of each packet group is obtained based on a transmission end time and a transmission start time of the packet group.

Optionally, the measurement result includes a traffic volume of the one or more flows.

For the apparatus in the foregoing embodiment, specific manners of executing operations by each module are described in detail in embodiments related to the method, and details are not described herein.

The following describes a basic hardware structure of the network device in embodiments of this application by using an example.

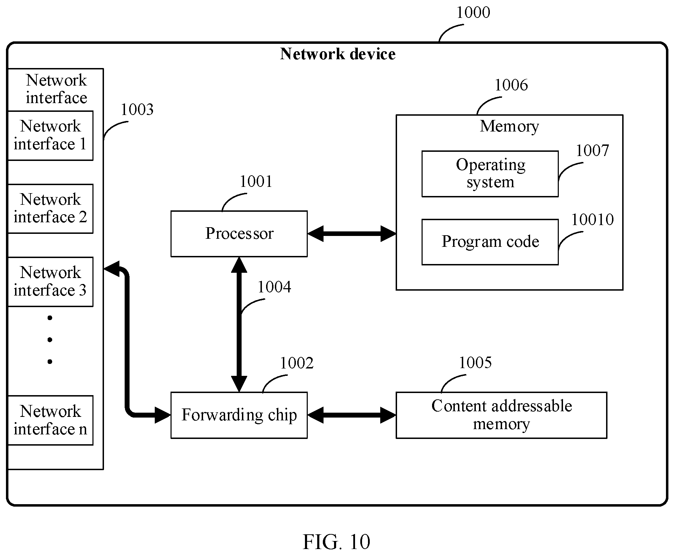

For example, FIG. 10 is a diagram of a hardware structure of a network device according to an embodiment of this application. As shown in FIG. 10, the network device 1000 includes a processor 1001, a forwarding chip 1002, and at least one network interface 1003. Optionally, with reference to FIG. 2, the network device 1000 in FIG. 10 is any network device 203 shown in FIG. 2.

Optionally, the processor 1001 includes a central processing unit (central processing unit, CPU) and/or a dedicated hardware chip. The CPU is a general-purpose CPU that has high scalability and flexibility. For example, the CPU is a single-core (single-CPU) processor, or a multi-core (multi-CPU) processor. The dedicated hardware chip is a hardware module capable of performing high-performance processing. The dedicated hardware chip includes at least one of an application-specific integrated circuit (application-specific integrated circuit, ASIC), a field-programmable gate array (field-programmable gate array, FPGA), or a network processor (network processor, NP).

The forwarding chip 1002 is configured to forward a request and data. For example, the forwarding chip 1002 is configured to: forward, through the network device 1000, an access request packet to a protected device, and forward an access response packet to a host.

The at least one network interface 1003 includes, for example, a network interface 1, a network interface 2, a network interface 3, ..., and a network interface n in FIG. 10. The network interface 1003 is any apparatus of a transceiver type, and is configured to communicate with another device or a communication network. For example, the network interface 1 in FIG. 10 communicates with a terminal device, and the network interface 2 in FIG. 10 communicates with a network management device. Optionally, the network interface 1003 includes at least one of a wired network interface or a wireless network interface. The wired network interface is, for example, an ethernet interface. The ethernet interface is, for example, an optical interface, an electrical interface, or a combination thereof. The wireless network interface is, for example, a wireless protected network (wireless local area network, WLAN) interface, a cellular network interface, or a combination thereof.

The at least one network interface 1003 is connected to the forwarding chip 1002, and the forwarding chip 1002 is connected to the processor 1001 via an internal connection 1004. The internal connection 1004 includes a path for transmitting data between the network interface 1003, the forwarding chip 1002, and the processor 1001. Optionally, the internal connection 1004 is a board or a bus. For example, the internal connection 1004 is an Ethernet, a fiber channel (fiber channel), a PCI-E (peripheral component interconnect express, PCI Express, which is a high-speed serial computer bus), RapidIO (a high-performance packet-switched interconnection architecture with a small quantity of pins), InfiniBand (InfiniBand), or a XAUI bus (an interface extender, characterized by connecting an Ethernet media access control (Media Access Control, MAC) layer to a physical layer).

Optionally, the network device 1000 further includes a content addressable memory (content addressable memory, CAM) 1005. The CAM 1005 is, for example, a ternary content-addressable memory (ternary content-addressable memory, TCAM). Optionally, the CAM 1005 exists independently, and is connected to the forwarding chip 1002 via the internal connection 1004. Alternatively, the CAM 1005 and the forwarding chip 1002 are integrated together, that is, the CAM 1005 is used as a memory inside the forwarding chip 1002.

Optionally, the network device 1000 further includes a memory 1006. The memory 1006 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code 10010 in a form of instructions or a data structure and that can be accessed by a computer, but is not limited thereto. The memory 1006 exists independently, and is connected to the processor 1001 via the internal connection 1004. Alternatively, the memory 1006 and the processor 1001 are integrated together.

The memory 1006 stores an operating system 1007 and the program code 10010. Optionally, the processor 1001 reads the operating system 1007 from the memory 1006 and runs the operating system 1007. The processor 1001 further reads the program code 10010 from the memory 1006, and runs the program code 10010 on the operating system 1007, to implement an action performed by the network device in the foregoing method provided in embodiments of this application.

Optionally, the foregoing components are separately disposed on chips independent of each other, or at least some or all of the components are disposed on a same chip. Whether the components are separately disposed on different chips or integrated and disposed on one or more chips usually depends on a requirement of a product design. This embodiment of this application imposes no limitation on specific implementations of the foregoing components.

The following describes a basic hardware structure of the network management device/service platform in embodiments of this application by using an example.

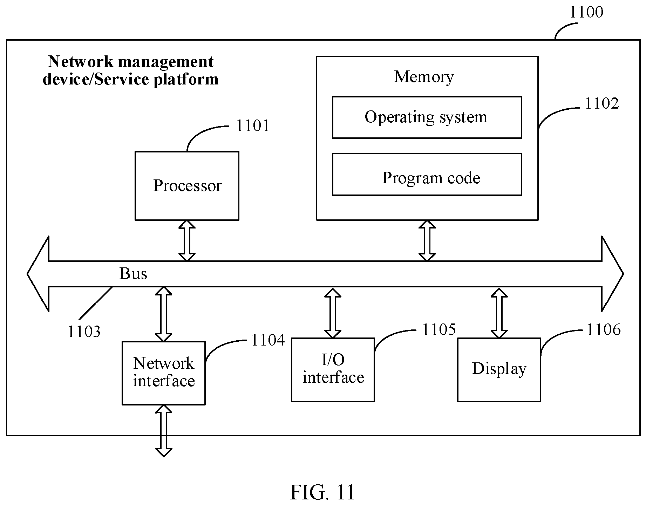

For example, FIG. 11 is a diagram of a hardware structure of a network management device/service platform according to an embodiment of this application. As shown in FIG. 11, the network management device/service platform 1100 includes a processor 1101 and a memory 1102. The processor 1101 is connected to the memory 1102 through a bus 1103. FIG. 11 is described by using an example in which the processor 1101 and the memory 1102 are independent of each other.

Optionally, the processor 1101 and the memory 1102 are integrated together. Optionally, with reference to FIG. 2, the network management device/service platform 1100 in FIG. 11 may be the network management device 201 or the service platform 204 shown in FIG. 2.

The memory 1102 is configured to store a computer program, and the computer program includes an operating system and program code. The memory 1102 is a storage medium of various types, for example, a ROM, a RAM, an EEPROM, a CD-ROM, a flash memory, an optical memory, a register, a compact disc storage, an optical disc storage, a magnetic disk, or another magnetic storage device.

The processor 1101 is a general-purpose processor or a dedicated processor. The processor 1101 may be a single-core processor or a multi-core processor. The processor 1101 includes at least one circuit, to perform an action performed by the network management device/service platform in the foregoing method provided in embodiments of this application.

Optionally, the network management device/service platform 1100 further includes a network interface 1104. The network interface 1104 is connected to the processor 1101 and the memory 1102 through the bus 1103. The network interface 1104 can implement communication between the network management device/service platform 1100 and another device.

Optionally, the network management device/service platform 1100 further includes an input/output (input/output, I/O) interface 1105. The I/O interface 1105 is connected to the processor 1101 and the memory 1102 through the bus 1103. The processor 1101 can receive an input command, data, or the like through the I/O interface 1105. The I/O interface 1105 is configured to connect the network management device/service platform 1100 to input devices. These input devices are, for example, a keyboard and a mouse. Optionally, in some possible scenarios, the network interface 1104 and the I/O interface 1105 are collectively referred to as a communication interface.

Optionally, the network management device/service platform 1100 further includes a display 1106. The display 1106 is connected to the processor 1101 and the memory 1102 through the bus 1103. The display 1106 can be configured to display an intermediate result and/or a final result generated by the processor 1101 by performing the foregoing method, for example, display a traffic analysis result corresponding to a service. In a possible implementation, the display 1106 is a touchscreen, to provide a human-machine interaction interface.

The bus 1103 is a communications bus of any type, and is configured to implement interconnection between internal components of the network management device/service platform 1100, for example, a system bus. In this embodiment of this application, an example in which the foregoing components in the network management device/service platform 1100 are interconnected through the bus 1103 is used for description. Optionally, the foregoing components in the network management device/service platform 1100 are communicatively connected to each other in another connection manner other than the bus 1103. For example, the foregoing components in the network management device/service platform 1100 are interconnected through a logical interface in the network management device/service platform 1100.

The foregoing components may be separately disposed on chips that are independent of each other, or at least some or all of the components may be disposed on a same chip. Whether the components are separately disposed on different chips or integrated and disposed on one or more chips usually depends on a requirement of a product design. This embodiment of this application imposes no limitation on specific implementations of the foregoing components.

The network management device/service platform 1100 shown in FIG. 11 is merely an example. During implementation, the network management device/service platform 1100 includes other components, which are not enumerated one by one in this specification. The network management device/service platform 1100 shown in FIG. 11 may analyze service traffic by performing all or some steps of the method provided in the foregoing embodiments.

An embodiment of this application further provides a service traffic analysis system, including a network management device and a plurality of network devices. The network management device is configured to perform an action performed by the network management device in the foregoing method embodiments. The network management device is configured to perform an action performed by the network device in the foregoing method embodiments.

Optionally, the system further includes a service platform. The service platform is configured to perform an action performed by the service platform in the foregoing method embodiments.

An embodiment of this application further provides a computer-readable storage medium. The computer-readable storage medium stores instructions. When the instructions are executed by a processor, an action performed by the network management device, the network device, or the service platform in the foregoing method embodiments is implemented.

An embodiment of this application further provides a computer program product, including a computer program. When the computer program is executed by a processor, an action performed by the network management device, the network device, or the service platform in the foregoing method embodiments is implemented.

An embodiment of this application further provides a chip. The chip includes a programmable logic circuit and/or program instructions. When the chip runs, an action performed by the network management device, the network device, or the service platform in the foregoing method embodiments is implemented.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state drive (solid state drive, SSD)), or the like.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for description, but cannot be understood as an indication or implication of relative importance.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be noted that information (including but not limited to user equipment information, user personal information, and the like), data (including but not limited to data for analysis, data for storage, data for display, and the like), and signals in this application are all authorized by users or fully authorized by all parties, and collection, use, and processing of related data need to comply with related laws, regulations, and standards of related countries and regions.

The foregoing descriptions are merely optional embodiments of this application, but are not intended to limit this application. Any modification, equivalent replacement, improvement, or the like made within the concept and principle of this application shall fall within the protection scope of this application.

## Claims

1. A service traffic analysis method, wherein the method comprises:
obtaining measurement task information of a service, wherein the measurement task information comprises device identifiers of a plurality of terminal devices associated with the service, the service comprises a plurality of service flows, and the plurality of terminal devices comprise sending devices and receiving devices of the plurality of service flows;
sending measurement commands to a plurality of network devices in a network, wherein the measurement command indicates a network device that receives the measurement command to collect statistics on a traffic characteristic of one or more flows passing through the network device;
receiving measurement results sent by the plurality of network devices, wherein a measurement result sent by each network device comprises a traffic characteristic corresponding to a flow identifier of one or more flows passing through the network device, and a flow identifier of each flow comprises a device identifier of a sending device of the flow and a device identifier of a receiving device of the flow; and
determining, based on the measurement results sent by the plurality of network devices and the device identifiers of the plurality of terminal devices, a traffic analysis result corresponding to the service.

2. The method according to claim 1, wherein the service is collective communication or a distributed training task.

3. The method according to claim 1 or 2, wherein the determining, based on the measurement results sent by the plurality of network devices and the device identifiers of the plurality of terminal devices, the traffic analysis result corresponding to the service comprises:
for the measurement result sent by each network device, determining, based on a flow identifier in the measurement result and the device identifiers of the plurality of terminal devices, a service flow that belongs to the service from among the one or more flows passing through the network device; and
determining the traffic analysis result based on traffic characteristics of the plurality of service flows in the measurement results sent by the plurality of network devices.

4. The method according to claim 3, wherein the plurality of network devices comprise a first network device, a measurement result sent by the first network device comprises a first traffic characteristic of a first service flow, the first service flow is any one of the plurality of service flows, and the first service flow comprises a plurality of packet groups respectively used to complete a plurality of data transmissions; and
the first traffic characteristic comprises a transmission start time and a transmission end time of each of the plurality of packet groups, and the determining the traffic analysis result based on the traffic characteristics of the plurality of service flows in the measurement results sent by the plurality of network devices comprises:
determining a flow completion time of the first service flow in a first statistical period based on a transmission duration of one or more packet groups, among the plurality of packet groups, whose transmission end times fall within the first statistical period, wherein the transmission duration of each packet group is obtained based on a transmission end time and a transmission start time of the packet group, wherein
the traffic analysis result comprises flow completion times of the plurality of service flows in a plurality of statistical periods, and the first statistical period is any one of the plurality of statistical periods.

5. The method according to claim 3, wherein the plurality of network devices comprise a second network device, a measurement result sent by the second network device comprises a second traffic characteristic of a second service flow, the second service flow is any one of the plurality of service flows, and the second service flow comprises a plurality of packet groups respectively used to complete a plurality of data transmissions; and
the second traffic characteristic comprises a flow completion time of the second service flow in a second statistical period, the flow completion time of the second service flow in the second statistical period is obtained based on a transmission duration of one or more packet groups, among the plurality of packet groups, whose transmission end times fall within the second statistical period, and the transmission duration of each packet group is obtained based on a transmission end time and a transmission start time of the packet group, wherein
the traffic analysis result comprises flow completion times of the plurality of service flows in a plurality of statistical periods, and the second statistical period is any one of the plurality of statistical periods.

6. The method according to claim 4 or 5, wherein a flow completion time of one service flow in a statistical period is a statistical value of transmission durations of all packet groups, in the service flow, whose transmission end times are in the statistical period.

7. The method according to any one of claims 4 to 6, wherein the method further comprises:
for any one of the plurality of service flows, if a difference between a flow completion time of the service flow in a third statistical period and a flow completion time of the service flow in a fourth statistical period is greater than a first threshold, determining that transmission quality of the service flow deteriorates, wherein the third statistical period is later than the fourth statistical period in time sequence, wherein
the traffic analysis result further comprises an indication for a service flow whose transmission quality deteriorates among the plurality of service flows.

8. The method according to claim 3, wherein the plurality of network devices comprise a third network device, a measurement result sent by the third network device comprises a third traffic characteristic of a third service flow, the third service flow is any one of the plurality of service flows, and the third service flow comprises a plurality of packet groups respectively used to complete a plurality of data transmissions; and
the third traffic characteristic comprises a transmission start time, a transmission end time, and a traffic volume of each of the plurality of packet groups, and the determining the traffic analysis result based on the traffic characteristics of the plurality of service flows in the measurement results sent by the plurality of network devices comprises:
determining a throughput of the third network device for the third service flow in a fifth statistical period based on a transmission duration and a traffic volume of one or more packet groups, among the plurality of packet groups, whose transmission end times are in the fifth statistical period, wherein the transmission duration of each packet group is obtained based on a transmission end time and a transmission start time of the packet group, wherein
the traffic analysis result comprises throughputs of the plurality of network devices for service flows passing through the plurality of network devices in a plurality of statistical periods, and the fifth statistical period is any one of the plurality of statistical periods.

9. The method according to claim 3, wherein the plurality of network devices comprise a fourth network device, a measurement result sent by the fourth network device comprises a fourth traffic characteristic of a fourth service flow, the fourth service flow is any one of the plurality of service flows, and the fourth service flow comprises a plurality of packet groups respectively used to complete a plurality of data transmissions; and
the fourth traffic characteristic comprises a throughput of the fourth network device for the fourth service flow in a sixth statistical period, the throughput for the fourth service flow in the sixth statistical period is obtained based on a transmission duration and a traffic volume of one or more packet groups, among the plurality of packet groups, whose transmission end times are in the sixth statistical period, and the transmission duration of each packet group is obtained based on a transmission end time and a transmission start time of the packet group, wherein
the traffic analysis result comprises throughputs of the plurality of network devices for service flows passing through the plurality of network devices in a plurality of statistical periods, and the sixth statistical period is any one of the plurality of statistical periods.

10. The method according to claim 8 or 9, wherein the method further comprises:
for any one of the plurality of service flows, if a difference between a throughput, of any network device through which the service flow passes, for the service flow in a seventh statistical period and a throughput of the network device for the service flow in an eighth statistical period is greater than a second threshold, determining that transmission quality of the service flow deteriorates, wherein the eighth statistical period is later than the seventh statistical period in time sequence, wherein
the traffic analysis result further comprises an indication for a service flow whose transmission quality deteriorates among the plurality of service flows.

11. The method according to any one of claims 4 to 10, wherein the sending the measurement commands to the plurality of network devices in the network comprises:
respectively sending the measurement commands to a plurality of access network devices in the network, wherein each access network device is configured to enable one or more of the plurality of terminal devices to access the network.

12. The method according to claim 3, wherein the measurement result sent by each network device comprises a traffic volume of the one or more flows passing through the network device, and the determining the traffic analysis result based on the traffic characteristics of the plurality of service flows in the measurement results sent by the plurality of network devices comprises:
for each network device, determining an accumulated traffic volume of the network device for the service based on traffic volumes of all service flows in the measurement result sent by the network device; and
determining load balance of the plurality of network devices for the service based on accumulated traffic volumes of the plurality of network devices for the service, wherein the load balance is negatively correlated with a difference between the accumulated traffic volumes of the plurality of network devices for the service, wherein
the traffic analysis result comprises the load balance of the plurality of network devices for the service.

13. The method according to claim 12, wherein the sending the measurement commands to the plurality of network devices in the network comprises:
respectively sending the measurement commands to all network devices on network paths of the plurality of service flows in the network.

14. The method according to any one of claims 1 to 13, wherein the measurement command further comprises a measurement indication, and the measurement indication comprises one or more of the following:
a source internet protocol IP address set, wherein the source IP address set comprises an IP address of each of one or more of the plurality of terminal devices, and the source IP address set indicates a network device that receives the measurement command to collect statistics on a traffic characteristic of a flow, passing through the network device, whose source IP address belongs to the source IP address set;
a destination IP address set, wherein the destination IP address set comprises an IP address of each of one or more of the plurality of terminal devices, and the destination IP address set indicates a network device that receives the measurement command to collect statistics on a traffic characteristic of a flow, passing through the network device, whose destination IP address belongs to the destination IP address set;
an ingress indication, wherein the ingress indication indicates a network device that receives the measurement command to collect statistics on a traffic characteristic of one or more flows received by the network device;
an egress indication, wherein the egress indication indicates a network device that receives the measurement command to collect statistics on a traffic characteristic of one or more flows sent by the network device; and
an interface indication, wherein the interface indication indicates a network device that receives the measurement command to collect statistics on a traffic characteristic of a flow passing through one or more specified interfaces of the network device, the measurement result sent by the network device further comprises an interface identifier, and the interface identifier indicates an interface through which the flow passes on the network device.

15. The method according to any one of claims 1 to 14, wherein the measurement task information further comprises a traffic analysis task, and the traffic analysis task indicates a traffic analysis type; and the method further comprises:
generating the measurement command based on the traffic analysis task, wherein a type of a traffic characteristic indicated by the measurement command for statistical collection matches the traffic analysis type indicated by the traffic analysis task; and
the determining, based on the measurement results sent by the plurality of network devices and the device identifiers of the plurality of terminal devices, the traffic analysis result corresponding to the service comprises:
determining, based on the measurement results sent by the plurality of network devices and the device identifiers of the plurality of terminal devices, the traffic analysis result of the service for the traffic analysis type indicated by the traffic analysis task.

16. The method according to any one of claims 1 to 15, wherein the obtaining the measurement task information of the service comprises:
receiving a service measurement task sent by a service platform, wherein the service measurement task comprises the measurement task information.

17. The method according to claim 16, wherein the method further comprises:
sending a service measurement result to the service platform, wherein the service measurement result comprises the traffic analysis result.

18. A service traffic analysis method, wherein the method comprises:
sending a service measurement task to a network management device, wherein the service measurement task comprises measurement task information of a service, the measurement task information comprises device identifiers of a plurality of terminal devices associated with the service, the service comprises a plurality of service flows, and the plurality of terminal devices comprise sending devices and receiving devices of the plurality of service flows; and
receiving a service measurement result sent by the network management device, wherein the service measurement result comprises a traffic analysis result corresponding to the service.

19. The method according to claim 18, wherein the service is collective communication or a distributed training task.

20. The method according to claim 18 or 19, wherein the method further comprises:
outputting the traffic analysis result.

21. A service traffic analysis method, applied to a network device, wherein the method comprises:
receiving a measurement command sent by a network management device, wherein the measurement command indicates the network device to collect statistics on a traffic characteristic of one or more flows passing through the network device;
collecting, based on the measurement command, statistics on the traffic characteristic of the one or more flows passing through the network device; and
sending a measurement result to the network management device, wherein the measurement result comprises a traffic characteristic corresponding to a flow identifier of the one or more flows passing through the network device, and a flow identifier of each flow comprises a device identifier of a sending device of the flow and a device identifier of a receiving device of the flow.

22. The method according to claim 21, wherein the measurement command further comprises a measurement indication, and the measurement indication comprises one or more of the following:
a source internet protocol IP address set, wherein the source IP address set comprises one or more IP addresses, and the source IP address set indicates the network device to collect statistics on a traffic characteristic of a flow, passing through the network device, whose source IP address belongs to the source IP address set;
a destination IP address set, wherein the destination IP address set comprises one or more IP addresses, and the destination IP address set indicates the network device to collect statistics on a traffic characteristic of a flow, passing through the network device, whose destination IP address belongs to the destination IP address set;
an ingress indication, wherein the ingress indication indicates the network device to collect statistics on a traffic characteristic of one or more flows received by the network device;
an egress indication, wherein the egress indication indicates the network device to collect statistics on a traffic characteristic of one or more flows sent by the network device; and
an interface indication, wherein the interface indication indicates the network device to collect statistics on a traffic characteristic of a flow passing through one or more specified interfaces of the network device, the measurement result sent by the network device further comprises an interface identifier, and the interface identifier indicates an interface through which the flow passes on the network device.

23. A service traffic analysis apparatus, wherein the apparatus comprises a plurality of functional modules, and the plurality of functional modules interact with each other to implement the method according to any one of claims 1 to 22.

24. A service traffic analysis apparatus, comprising a processor and a memory, wherein
the memory is configured to store a computer program, and the computer program comprises program instructions; and
the processor is configured to invoke the computer program, to implement the method according to any one of claims 1 to 22.

25. A service traffic analysis system, comprising a network management device and a plurality of network devices, wherein the network management device is configured to perform the method according to any one of claims 1 to 17, and the network device is configured to perform the method according to claim 21 or 22.

26. The system according to claim 25, wherein the system further comprises a service platform, and the service platform is configured to perform the method according to any one of claims 18 to 20.

27. A computer-readable storage medium, wherein the computer-readable storage medium stores instructions; and when the instructions are executed by a processor, the method according to any one of claims 1 to 22 is implemented.

28. A computer program product, comprising a computer program, wherein when the computer program is executed by a processor, the method according to any one of claims 1 to 22 is implemented.
